# EUROPEAN PATENT APPLICATION

(11) **EP 4 572 367 A1**
(43) Date of publication of application: **18.06.2025**
(21) Application number: 23851531.6
(22) Date of filing: 12.07.2023
(51) Int. Cl.: H04W 24/02

(54) **TA TRANSMISSION METHOD AND DEVICE**

(30) Priority: 10.08.2022 CN 202210959378
(71) Applicant: Datang Mobile Communications Equipment Co., Ltd., Beijing 100085 (CN)
(72) Inventor: SUN, Jiaying, Beijing 100085 (CN); ZHANG, Dajun, Beijing 100085 (CN); WANG, Lei, Beijing 100085 (CN); ZHANG, Bufang, Beijing 100085 (CN)
(74) Representative: Studio Torta S.p.A.
(86) International application number: PCT/CN2023/106936
(87) International publication number: WO 2024/032308

(57) **Abstract**

Embodiments of the present disclosure provide a TA transmission method and device. The method is applied to a candidate distribution unit (DU), and comprises: sending a first message to a target centralized unit (CU), wherein the first message contains a time advance (TA) value corresponding to a target terminal in a first candidate cell, or contains a TA value corresponding to the target terminal in a specified candidate cell.

## Description

### CROSS-REFERENCES TO RELATED APPLICATIONS

The present application claims priority to Chinese patent application No. 202210959378.9 filed on August 10, 2022, entitled "TA Transmission Method and Device", which is hereby incorporated by reference in its entirety.

### FIELD

The present application relates to the field of radio communication, and in particular, to methods and apparatuses for TA transfer.

### BACKGROUND

In the Release 18 version of the 5th generation mobile communication (5G), a discussion on the support of layer 1 (L1) and layer 2 (L2) mobility is introduced.

In the related art, in this scenario, a change and/or addition of a serving cell is triggered by a command from L1 or L2. When a timing advance (TA) is measured, a distributed unit (DU) generally provides a terminal with an uplink resource configuration, and a centralized unit (CU) sends the uplink resource configuration to the terminal (that is, a user equipment (UE)) through a radio resource control (RRC) message. The terminal applies the configuration information to initiate a random access, and the DU detects an uplink signal or a preamble from the UE during the random access procedure and then calculates the TA. In the above procedure, because a target DU and a candidate DU cannot send the TA value corresponding to the terminal to the DU which currently provides a service to the terminal after obtaining the TA value, it is also impossible to inform the terminal through a serving DU, which increases the delay of L1 and L2 mobility.

Therefore, how to send respective TA calculation values among different DUs is a problem to be solved urgently in this field.

### BRIEF SUMMARY

Embodiments of the present application provide methods and apparatuses for timing advance (TA) transfer, which are used to solve the problem that there is no solution for sending a TA between a distributed unit (DU) and a centralized unit (CU) in associated mechanisms, resulting in that when handing over and/or adding service cells based on layer 1 (L1) and layer 2 (L2), random access synchronization is still required to obtain the TA, and resulting in a large delay.

An embodiment of the present application provides a method for timing advance (TA) transfer, performed by a candidate distributed unit (DU), including:
sending a first message to a target centralized unit (CU), where
the first message contains a TA value of a first candidate cell for a target terminal, or contains a TA value of a specified candidate cell for a target terminal; and
the first candidate cell is a candidate cell corresponding to the candidate DU, and the specified candidate cell is one or more of first candidate cells.

In an embodiment, in case that the first message contains the TA value of the first candidate cell for the target terminal, the first message includes one or more of the following:
identification information of the target terminal;
identifier information of the first candidate cell;
frequency information of the first candidate cell;
indication information for an uplink signal beam corresponding to the first candidate cell;
indication information for the TA value, where the indication information is used to indicate whether the first message contains the TA value; or
a TA value corresponding to the first candidate cell.

In an embodiment, in case that the first message contains the TA value of the specified candidate cell for the target terminal, the first message includes one or more of the following:
identification information of the target terminal;
identifier information of the specified candidate cell;
frequency information of the specified candidate cell;
indication information for an uplink signal beam corresponding to the specified candidate cell;
indication information for the TA value, where the indication information is used to indicate whether the first message contains the TA value; or
a TA value corresponding to the specified candidate cell.

In an embodiment, before sending the first message to the target CU, the method includes:
receiving a reporting configuration message sent from the target CU, where the reporting configuration message is used to configure a reporting rule of the candidate DU reporting the TA value of the specified candidate cell for the target terminal;
   or,
receiving a first request message sent from the target CU, where the first request message is used to obtain a first TA value determined by the candidate DU from the candidate DU, and the first TA value is a TA value of the specified candidate cell for the target terminal.

In an embodiment, the reporting configuration message includes one or more of the following:
identification information of the target terminal;
identifier information of the specific candidate cell;
frequency information of the specified candidate cell;
a TA reporting period, where the TA reporting period is a positive integer multiple of a measurement period of an uplink reference signal;
a TA reporting number threshold, used to indicate that to report a TA value for a last time the DU performs measurement to obtain TA values after a number of times the candidate DU performs measurement to obtain TA values reaches the TA reporting number threshold; or
a TA reporting format, used to indicate a representation way of a TA value for a TA reporting.

In an embodiment, the first request message includes one or more of the following:
identification information of the target terminal;
identifier information of the specific candidate cell;
frequency information of the specified candidate cell; or
a TA request identifier, used to indicate that a TA value of a candidate cell for the target terminal is obtained in a unit of a single candidate cell.

In an embodiment, the identifier information of the first candidate cell is any one of a customized cell identifier, a new radio cell global identifier, a physical cell identifier, or a cell global identifier.

In an embodiment, the identifier information of the specified candidate cell is any one of a customized cell identifier, a new radio cell global identifier, a physical cell identifier, or a cell global identifier.

In an embodiment, the indication information for the uplink signal beam includes one or more of the following:
a beam index of the uplink signal beam;
a transmission configuration indicator index of the uplink signal beam; or
a spatial relation corresponding to the uplink signal beam.

In an embodiment, the TA reporting format includes any one of the following:
reporting a TA measurement value;
reporting a change amount in a TA measurement value, where the change amount in the TA measurement value is a difference between a TA measurement value at a current moment and a given reference value, or a difference between a TA measurement value at a current moment and a TA measurement value at a previous moment; or
reporting an index corresponding to a TA measurement value in a given TA value list, where the given TA value list stores different measurement value intervals of TA value and indexes corresponding to each of the measurement value intervals.

In an embodiment, the first message is an improved F1 interface message, or a customized F1 interface message, and the improved F1 interface message is obtained by expanding an original F1 interface message.

An embodiment of the present application further provides a method for timing advance (TA) transfer, performed by a serving distributed unit (DU), including:
sending a second request message to a target centralized unit (CU) to obtain a first TA value determined by a candidate DU, where the first TA value is a TA value of a specified candidate cell for a target terminal,
where the specified candidate cell is one or more of first candidate cells, the first candidate cell is a candidate cell corresponding to the candidate DU, and the target CU stores first TA values determined by all candidate DUs.

In an embodiment, the second request message includes any one or more of the following:
identification information of the target terminal;
identifier information of the specific candidate cell;
frequency information of the specified candidate cell; or
a TA request identifier, used to indicate that a TA value of a candidate cell for the target terminal is obtained in a unit of a single candidate cell.

In an embodiment, the identifier information of the specified candidate cell is any one of a customized cell identifier, a new radio cell global identifier, a physical cell identifier, or a cell global identifier.

In an embodiment, the second request message is sent through an improved F1 interface message or a customized F1 interface message, and the improved F1 interface message is obtained by expanding an original F1 interface message.

An embodiment of the present application further provides a method for timing advance (TA) transfer, performed by a target centralized unit (CU), including:
receiving a first message sent from a candidate distributed unit (DU);
determining, based on the first message, a TA value of a first candidate cell for a target terminal, or a TA value of a specified candidate cell for a target terminal; where
the first message contains the TA value of the first candidate cell for the target terminal, or contains the TA value of the specified candidate cell for the target terminal; and
the first candidate cell is a candidate cell corresponding to the candidate DU, and the specified candidate cell is one or more of first candidate cells.

In an embodiment, in case that the first message contains the TA value of the specified candidate cell for the target terminal, before receiving the first message sent from the candidate DU, the method includes:
sending a reporting configuration message to the candidate DU, where the reporting configuration message is used to configure a reporting rule of the candidate DU reporting the TA value of the specified candidate cell for the target terminal; or
sending a first request message to the candidate DU, where the first request message is used to obtain a TA value of the specified candidate cell for the target terminal determined by the candidate DU.

In an embodiment, the reporting configuration message includes one or more of the following:
identification information of the target terminal;
identifier information of the specific candidate cell;
frequency information of the specified candidate cell;
a TA reporting period, where the TA reporting period is a positive integer multiple of a measurement period of an uplink reference signal;
a TA reporting number threshold, used to indicate that to report a TA value for a last time the DU performs measurement to obtain TA values after a number of times the candidate DU performs measurement to obtain TA values reaches the TA reporting number threshold; or
a TA reporting format, used to indicate a representation way of a TA value for a TA reporting.

In an embodiment, the first request message includes any one or more of the following:
identification information of the target terminal;
identifier information of the specific candidate cell;
frequency information of the specified candidate cell; or
a TA request identifier, used to indicate that a TA value of a candidate cell for the target terminal is obtained in a unit of a single candidate cell.

In an embodiment, the specified candidate cell is determined based on the identifier information of the specified candidate cell, and the identifier information of the specified candidate cell is any one of a customized cell identifier, a new radio cell global identifier, a physical cell identifier, or a cell global identifier.

In an embodiment, the first candidate cell is determined based on the identifier information of the first candidate cell, and the identifier information of the first candidate cell is any one of a customized cell identifier, a new radio cell global identifier, a physical cell identifier, or a cell global identifier.

In an embodiment, the TA reporting format includes any one of the following:
reporting a TA measurement value;
reporting a change amount in a TA measurement value, where the change amount in the TA measurement value is a difference between a TA measurement value at a current moment and a given reference value, or a difference between a TA measurement value at a current moment and a TA measurement value at a previous moment; or
reporting an index corresponding to a TA measurement value in a given TA value list, where the given TA value list stores different measurement value intervals of TA value and indexes corresponding to each of the measurement value intervals.

In an embodiment, the first message is an improved F1 interface message, or a customized F1 interface message, and the improved F1 interface message is obtained by expanding an original F1 interface message.

An embodiment of the present application further provides a distributed unit (DU), including a memory, a transceiver and a processor,
where the memory is used for storing a computer program, the transceiver is used for sending and receiving data under control of the processor, and the processor is used for reading the computer program in the memory and performing the following operations:
sending a first message to a target centralized unit (CU), where
the first message contains a TA value of a first candidate cell for a target terminal, or contains a TA value of a specified candidate cell for a target terminal; and
the first candidate cell is a candidate cell corresponding to the candidate DU, and the specified candidate cell is one or more of first candidate cells.

In an embodiment, in case that the first message contains the TA value of the first candidate cell for the target terminal, the first message includes one or more of the following:
identification information of the target terminal;
identifier information of the first candidate cell;
frequency information of the first candidate cell;
indication information for an uplink signal beam corresponding to the first candidate cell;
indication information for the TA value, where the indication information is used to indicate whether the first message contains the TA value; or
a TA value corresponding to the first candidate cell.

In an embodiment, in case that the first message contains the TA value of the specified candidate cell for the target terminal, the first message includes one or more of the following:
identification information of the target terminal;
identifier information of the specified candidate cell;
frequency information of the specified candidate cell;
indication information for an uplink signal beam corresponding to the specified candidate cell;
indication information for the TA value, where the indication information is used to indicate whether the first message contains the TA value; or
a TA value corresponding to the specified candidate cell.

In an embodiment, before sending the first message to the target CU, the operations include:
receiving a reporting configuration message sent from the target CU, where the reporting configuration message is used to configure a reporting rule of the candidate DU reporting the TA value of the specified candidate cell for the target terminal;
   or,
receiving a first request message sent from the target CU, where the first request message is used to obtain a first TA value determined by the candidate DU from the candidate DU, and the first TA value is a TA value of the specified candidate cell for the target terminal.

In an embodiment, the reporting configuration message includes one or more of the following:
identification information of the target terminal;
identifier information of the specific candidate cell;
frequency information of the specified candidate cell;
a TA reporting period, where the TA reporting period is a positive integer multiple of a measurement period of an uplink reference signal;
a TA reporting number threshold, used to indicate that to report a TA value for a last time the DU performs measurement to obtain TA values after a number of times the candidate DU performs measurement to obtain TA values reaches the TA reporting number threshold; or
a TA reporting format, used to indicate a representation way of a TA value for a TA reporting.

In an embodiment, the first request message includes one or more of the following:
identification information of the target terminal;
identifier information of the specific candidate cell;
frequency information of the specified candidate cell; or
a TA request identifier, used to indicate that a TA value of a candidate cell for the target terminal is obtained in a unit of a single candidate cell.

In an embodiment, the identifier information of the first candidate cell is any one of a customized cell identifier, a new radio cell global identifier, a physical cell identifier, or a cell global identifier.

In an embodiment, the identifier information of the specified candidate cell is any one of a customized cell identifier, a new radio cell global identifier, a physical cell identifier, or a cell global identifier.

In an embodiment, the indication information for the uplink signal beam includes one or more of the following:
a beam index of the uplink signal beam;
a transmission configuration indicator index of the uplink signal beam; or
a spatial relation corresponding to the uplink signal beam.

In an embodiment, the TA reporting format includes any one of the following:
reporting a TA measurement value;
reporting a change amount in a TA measurement value, where the change amount in the TA measurement value is a difference between a TA measurement value at a current moment and a given reference value, or a difference between a TA measurement value at a current moment and a TA measurement value at a previous moment; or
reporting an index corresponding to a TA measurement value in a given TA value list, where the given TA value list stores different measurement value intervals of TA value and indexes corresponding to each of the measurement value intervals.

In an embodiment, the first message is an improved F1 interface message, or a customized F1 interface message, and the improved F1 interface message is obtained by expanding an original F1 interface message.

An embodiment of the present application further provides a distributed unit (DU), including a memory, a transceiver and a processor,
where the memory is used for storing a computer program, the transceiver is used for sending and receiving data under control of the processor, and the processor is used for reading the computer program in the memory and performing the following operations:
sending a second request message to a target centralized unit (CU) to obtain a first TA value determined by a candidate DU, where the first TA value is a TA value of a specified candidate cell for a target terminal,
where the specified candidate cell is one or more of first candidate cells, the first candidate cell is a candidate cell corresponding to the candidate DU, and the target CU stores first TA values determined by all candidate DUs.

In an embodiment, the second request message includes any one or more of the following:
identification information of the target terminal;
identifier information of the specific candidate cell;
frequency information of the specified candidate cell; or
a TA request identifier, used to indicate that a TA value of a candidate cell for the target terminal is obtained in a unit of a single candidate cell.

In an embodiment, the identifier information of the specified candidate cell is any one of a customized cell identifier, a new radio cell global identifier, a physical cell identifier, or a cell global identifier.

In an embodiment, the second request message is sent through an improved F1 interface message or a customized F1 interface message, and the improved F1 interface message is obtained by expanding an original F1 interface message.

An embodiment of the present application further provides a centralized unit (CU), including a memory, a transceiver and a processor,
where the memory is used for storing a computer program, the transceiver is used for sending and receiving data under control of the processor, and the processor is used for reading the computer program in the memory and performing the following operations:
receiving a first message sent from a candidate distributed unit (DU);
determining, based on the first message, a TA value of a first candidate cell for a target terminal, or a TA value of a specified candidate cell for a target terminal; where
the first message contains the TA value of the first candidate cell for the target terminal, or contains the TA value of the specified candidate cell for the target terminal; and
the first candidate cell is a candidate cell corresponding to the candidate DU, and the specified candidate cell is one or more of first candidate cells.

In an embodiment, in case that the first message contains the TA value of the specified candidate cell for the target terminal, before receiving the first message sent from the candidate DU, the operations include:
sending a reporting configuration message to the candidate DU, where the reporting configuration message is used to configure a reporting rule of the candidate DU reporting the TA value of the specified candidate cell for the target terminal; or
sending a first request message to the candidate DU, where the first request message is used to obtain a TA value of the specified candidate cell for the target terminal determined by the candidate DU.

In an embodiment, the reporting configuration message includes one or more of the following:
identification information of the target terminal;
identifier information of the specific candidate cell;
frequency information of the specified candidate cell;
a TA reporting period, where the TA reporting period is a positive integer multiple of a measurement period of an uplink reference signal;
a TA reporting number threshold, used to indicate that to report a TA value for a last time the DU performs measurement to obtain TA values after a number of times the candidate DU performs measurement to obtain TA values reaches the TA reporting number threshold; or
a TA reporting format, used to indicate a representation way of a TA value for a TA reporting.

In an embodiment, the first request message includes any one or more of the following:
identification information of the target terminal;
identifier information of the specific candidate cell;
frequency information of the specified candidate cell; or
a TA request identifier, used to indicate that a TA value of a candidate cell for the target terminal is obtained in a unit of a single candidate cell.

In an embodiment, the specified candidate cell is determined based on the identifier information of the specified candidate cell, and the identifier information of the specified candidate cell is any one of a customized cell identifier, a new radio cell global identifier, a physical cell identifier, or a cell global identifier.

In an embodiment, the first candidate cell is determined based on the identifier information of the first candidate cell, and the identifier information of the first candidate cell is any one of a customized cell identifier, a new radio cell global identifier, a physical cell identifier, or a cell global identifier.

In an embodiment, the TA reporting format includes any one of the following:
reporting a TA measurement value;
reporting a change amount in a TA measurement value, where the change amount in the TA measurement value is a difference between a TA measurement value at a current moment and a given reference value, or a difference between a TA measurement value at a current moment and a TA measurement value at a previous moment; or
reporting an index corresponding to a TA measurement value in a given TA value list, where the given TA value list stores different measurement value intervals of TA value and indexes corresponding to each of the measurement value intervals.

In an embodiment, the first message is an improved F1 interface message, or a customized F1 interface message, and the improved F1 interface message is obtained by expanding an original F1 interface message.

An embodiment of the present application further provides an apparatus for timing advance (TA) transfer, for use in a candidate distributed unit (DU), including:
a first sending module, used for sending a first message to a target centralized unit (CU), where
the first message contains a TA value of a first candidate cell for a target terminal, or contains a TA value of a specified candidate cell for a target terminal; and
the first candidate cell is a candidate cell corresponding to the candidate DU, and the specified candidate cell is one or more of first candidate cells.

In an embodiment, in case that the first message contains the TA value of the first candidate cell for the target terminal, the first message includes one or more of the following:
identification information of the target terminal;
identifier information of the first candidate cell;
frequency information of the first candidate cell;
indication information for an uplink signal beam corresponding to the first candidate cell;
indication information for the TA value, where the indication information is used to indicate whether the first message contains the TA value; or
a TA value corresponding to the first candidate cell.

In an embodiment, in case that the first message contains the TA value of the specified candidate cell for the target terminal, the first message includes one or more of the following:
identification information of the target terminal;
identifier information of the specified candidate cell;
frequency information of the specified candidate cell;
indication information for an uplink signal beam corresponding to the specified candidate cell;
indication information for the TA value, where the indication information is used to indicate whether the first message contains the TA value; or
a TA value corresponding to the specified candidate cell.

In an embodiment, the apparatus further includes a first receiving module, used for:
receiving a reporting configuration message sent from the target CU, where the reporting configuration message is used to configure a reporting rule of the candidate DU reporting the TA value of the specified candidate cell for the target terminal;
   or,
receiving a first request message sent from the target CU, where the first request message is used to obtain a first TA value determined by the candidate DU from the candidate DU, and the first TA value is a TA value of the specified candidate cell for the target terminal.

In an embodiment, the reporting configuration message includes one or more of the following:
identification information of the target terminal;
identifier information of the specific candidate cell;
frequency information of the specified candidate cell;
a TA reporting period, where the TA reporting period is a positive integer multiple of a measurement period of an uplink reference signal;
a TA reporting number threshold, used to indicate that to report a TA value for a last time the DU performs measurement to obtain TA values after a number of times the candidate DU performs measurement to obtain TA values reaches the TA reporting number threshold; or
a TA reporting format, used to indicate a representation way of a TA value for a TA reporting.

In an embodiment, the first request message includes one or more of the following:
identification information of the target terminal;
identifier information of the specific candidate cell;
frequency information of the specified candidate cell; or
a TA request identifier, used to indicate that a TA value of a candidate cell for the target terminal is obtained in a unit of a single candidate cell.

In an embodiment, the identifier information of the first candidate cell is any one of a customized cell identifier, a new radio cell global identifier, a physical cell identifier, or a cell global identifier.

In an embodiment, the identifier information of the specified candidate cell is any one of a customized cell identifier, a new radio cell global identifier, a physical cell identifier, or a cell global identifier.

In an embodiment, the indication information for the uplink signal beam includes one or more of the following:
a beam index of the uplink signal beam;
a transmission configuration indicator index of the uplink signal beam; or
a spatial relation corresponding to the uplink signal beam.

In an embodiment, the TA reporting format includes any one of the following:
reporting a TA measurement value;
reporting a change amount in a TA measurement value, where the change amount in the TA measurement value is a difference between a TA measurement value at a current moment and a given reference value, or a difference between a TA measurement value at a current moment and a TA measurement value at a previous moment; or
reporting an index corresponding to a TA measurement value in a given TA value list, where the given TA value list stores different measurement value intervals of TA value and indexes corresponding to each of the measurement value intervals.

In an embodiment, the first message is an improved F1 interface message, or a customized F1 interface message, and the improved F1 interface message is obtained by expanding an original F1 interface message.

An embodiment of the present application further provides an apparatus for timing advance (TA) transfer, for use in a serving distributed unit (DU), including:
a second sending module, used for sending a second request message to a target centralized unit (CU) to obtain a first TA value determined by a candidate DU, where the first TA value is a TA value of a specified candidate cell for a target terminal,
where the specified candidate cell is one or more of first candidate cells, the first candidate cell is a candidate cell corresponding to the candidate DU, and the target CU stores first TA values determined by all candidate DUs.

In an embodiment, the second request message includes any one or more of the following:
identification information of the target terminal;
identifier information of the specific candidate cell;
frequency information of the specified candidate cell; or
a TA request identifier, used to indicate that a TA value of a candidate cell for the target terminal is obtained in a unit of a single candidate cell.

In an embodiment, the identifier information of the specified candidate cell is any one of a customized cell identifier, a new radio cell global identifier, a physical cell identifier, or a cell global identifier.

In an embodiment, the second request message is sent through an improved F1 interface message or a customized F1 interface message, and the improved F1 interface message is obtained by expanding an original F1 interface message.

An embodiment of the present application further provides an apparatus for timing advance (TA) transfer, for use in a target centralized unit (CU), including:
a third receiving module, used for receiving a first message sent from a candidate distributed unit (DU); and
a third determining module, used for determining, based on the first message, a TA value of a first candidate cell for a target terminal, or a TA value of a specified candidate cell for a target terminal; where
the first message contains the TA value of the first candidate cell for the target terminal, or contains the TA value of the specified candidate cell for the target terminal; and
the first candidate cell is a candidate cell corresponding to the candidate DU, and the specified candidate cell is one or more of first candidate cells.

In an embodiment, the apparatus further includes a third sending module, used for:
sending a reporting configuration message to the candidate DU, where the reporting configuration message is used to configure a reporting rule of the candidate DU reporting the TA value of the specified candidate cell for the target terminal; or
sending a first request message to the candidate DU, where the first request message is used to obtain a TA value of the specified candidate cell for the target terminal determined by the candidate DU.

In an embodiment, the reporting configuration message includes one or more of the following:
identification information of the target terminal;
identifier information of the specific candidate cell;
frequency information of the specified candidate cell;
a TA reporting period, where the TA reporting period is a positive integer multiple of a measurement period of an uplink reference signal;
a TA reporting number threshold, used to indicate that to report a TA value for a last time the DU performs measurement to obtain TA values after a number of times the candidate DU performs measurement to obtain TA values reaches the TA reporting number threshold; or
a TA reporting format, used to indicate a representation way of a TA value for a TA reporting.

In an embodiment, the first request message includes any one or more of the following:
identification information of the target terminal;
identifier information of the specific candidate cell;
frequency information of the specified candidate cell; or
a TA request identifier, used to indicate that a TA value of a candidate cell for the target terminal is obtained in a unit of a single candidate cell.

In an embodiment, the specified candidate cell is determined based on the identifier information of the specified candidate cell, and the identifier information of the specified candidate cell is any one of a customized cell identifier, a new radio cell global identifier, a physical cell identifier, or a cell global identifier.

In an embodiment, the first candidate cell is determined based on the identifier information of the first candidate cell, and the identifier information of the first candidate cell is any one of a customized cell identifier, a new radio cell global identifier, a physical cell identifier, or a cell global identifier.

In an embodiment, the TA reporting format includes any one of the following:
reporting a TA measurement value;
reporting a change amount in a TA measurement value, where the change amount in the TA measurement value is a difference between a TA measurement value at a current moment and a given reference value, or a difference between a TA measurement value at a current moment and a TA measurement value at a previous moment; or
reporting an index corresponding to a TA measurement value in a given TA value list, where the given TA value list stores different measurement value intervals of TA value and indexes corresponding to each of the measurement value intervals.

In an embodiment, the first message is an improved F1 interface message, or a customized F1 interface message, and the improved F1 interface message is obtained by expanding an original F1 interface message.

An embodiment of the present application further provides a computer readable storage medium storing a computer program, where the computer is used to cause a computer to perform the methods for TA transfer described above.

An embodiment of the present application further provides a communication device storing a computer program, where the computer is used to cause the communication device to perform the methods for TA transfer described above.

An embodiment of the present application further provides a processor-readable storage medium storing a computer program, where the computer is used to cause a processor to perform the methods for TA transfer described above.

An embodiment of the present application further provides a chip product storing a computer program, where the computer is used to cause the chip product to perform the methods for TA transfer described above.

In the methods and apparatuses for TA transfer provided by the embodiment of the present application, the TA value corresponding to each candidate cell calculated by the candidate DU is sent to the CU in a real-time/non-real-time transmission way, and the TA value is forwarded to the serving DU, which is beneficial for the serving DU to obtain the TA value calculated by other candidate DUs and configure the TA value to the terminal, reduces the signaling interaction between interfaces, and reduces the L1 and L2 mobility delays and transmission delays.

### BRIEF DESCRIPTION OF THE DRAWINGS

In order to illustrate the solutions disclosed in the embodiments of the present application or the related art more clearly, the drawings used in the description of the embodiments or in the related art are briefly described below. The drawings in the following description are only some embodiments of the present application, and other drawings may be obtained according to these drawings without any creative work for those skilled in the art.
FIG. 1 is a first schematic flowchart of a method for timing advance (TA) transfer according to an embodiment of the present application;
FIG. 2 is a second schematic flowchart of a method for TA transfer according to an embodiment of the present application;
FIG. 3 is a third schematic flowchart of a method for TA transfer according to an embodiment of the present application;
FIG. 4 is a first schematic flowchart of an implementation of a method for TA transfer according to an embodiment of the present application;
FIG. 5 is a second schematic flowchart of an implementation of a method for TA transfer according to an embodiment of the present application;
FIG. 6 is a third schematic flowchart of an implementation of a method for TA transfer according to an embodiment of the present application;
FIG. 7 is a fourth schematic flowchart of an implementation of a method for TA transfer according to an embodiment of the present application;
FIG. 8 is a fifth schematic flowchart of an implementation of a method for TA transfer according to an embodiment of the present application;
FIG. 9 is a first schematic structural diagram of a distributed unit (DU) according to an embodiment of the present application;
FIG. 10 is a second schematic structural diagram of a DU according to an embodiment of the present application;
FIG. 11 is a schematic structural diagram of a centralized unit (CU) according to an embodiment of the present application;
FIG. 12 is a first schematic structural diagram of an apparatus for TA transfer according to an embodiment of the present application;
FIG. 13 is a second schematic structural diagram of an apparatus for TA transfer according to an embodiment of the present application; and
FIG. 14 is a third schematic structural diagram of an apparatus for TA transfer according to an embodiment of the present application.

### DETAILED DESCRIPTION

In the embodiments of the present application, the term "and/or" describes a related relationship of associated objects, and indicates that there may be three kinds of relationships. For example, A and/or B may represent that A exists alone, A and B exist simultaneously, and B exists alone. Character "/" generally indicates that the associated objects have an "or" relationship.

In the embodiments of the present application, the term "multiple" refers to two or more than two, and other quantifiers are similar.

The solutions in the embodiments of the present application are clearly and completely described in the following with reference to the accompanying drawings in the embodiments of the present application. These embodiments are only a part of the embodiments of the present application, and not all of the embodiments. All other embodiments obtained by a person of ordinary skill in the art based on the embodiments of the present application without any creative work belong to the scope of the present application.

In order to facilitate a clearer understanding for the embodiments of the present application, some contents related to the embodiments of the present application are first introduced.

Real-time handover. In case that a network side decides to hand a user equipment (UE) over from a current serving cell to another cell, the network side sends a radio resource control (RRC) reconfiguration message to the UE, which contains configuration information required for the UE to access a target cell; after receiving the RRC reconfiguration message sent from the network side, the UE applies the configuration information of the target cell included in the reconfiguration message, initiates random access on a target cell side for synchronization, and feeds back an RRC reconfiguration completion message to the target cell side to indicate to the network side that the UE has successfully accessed the target cell.

Conditional handover. A network side preconfigures multiple target cells for a UE, that is, configuration information and an execution condition of the target cell are sent to the UE in advance. In case that the UE receives the configuration information of the target cell, it does not immediately perform a handover, a primary secondary cell (PSCell) change or a PSCell addition in a traditional manner, but saves the received configuration and measures and evaluates the configured candidate cells until there is a cell that meets the execution condition. Then, the UE performs a corresponding handover, PSCell change or PSCell addition procedure based on the stored reconfiguration message of the cell, that is, completes a downlink synchronization and triggers a random access procedure, thereby obtaining a timing advance (TA) value, accessing a target primary cell (PCell) or a primary secondary cell (PSCell), and feeding back a corresponding reconfiguration completion message to the network side.

In order to avoid initiating a random access procedure to obtain a TA and reduce the latency of L1 and L2 mobility, it is considered to obtain a TA of a target/candidate cell for a user in advance. In associated mechanisms, there is no mechanism for sending a TA between an interface of a distributed unit (DU) and an interface of a centralized unit (CU). In case that a TA value cannot be sent to a source DU after being obtained in a target/candidate cell, the TA cannot be informed to a UE.

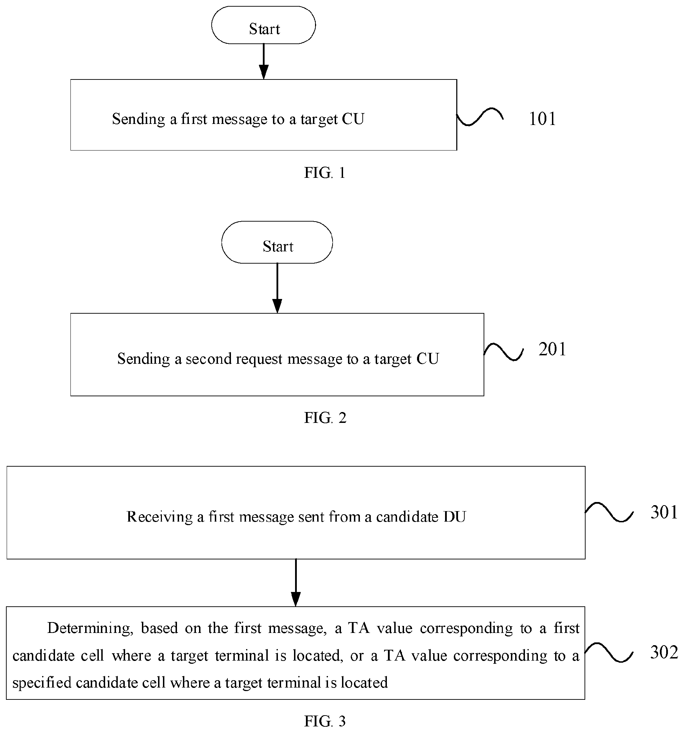

FIG. 1 is a first schematic flowchart of a method for timing advance (TA) transfer according to an embodiment of the present application. The method is performed by a candidate distributed unit (DU). As shown in FIG. 1, the method includes:
step 101: sending a first message to a target centralized unit (CU), where
the first message contains a TA value of a first candidate cell for a target terminal, or contains a TA value of a specified candidate cell for a target terminal; and
the first candidate cell is a candidate cell corresponding to the candidate DU, and the specified candidate cell is one or more of first candidate cells.

In an embodiment, in a 5th generation (5G) communication system, an access network (base station) is divided into a centralized unit (CU) and one or more distributed units (DU). The CU is connected to the 5G core network (5GC) through the NG interface, and may control and coordinate multiple cells within the access network, including higher layer control and data functions of the protocol stack. The main protocol layers involved include an RRC function of a control plane and the internet protocol (IP), service data adaptation protocol (SDAP) and packet data convergence protocol (PDCP) of a user plane. The DU is a distributed unit, which mainly implements radio frequency processing functions, and baseband processing functions such as radio link control (RLC), media access control (MAC) and physical layer (PHY). Based on actual equipment implementation, the DU is only responsible for baseband processing functions, and a remote radio unit (RRU) is responsible for radio processing functions. The DU and the RRU are connected through an enhanced common public radio interface (eCPRI). The CU and the DU are connected through an F1 interface. Logical systems of the CU and the DU may be divided into two types, namely a CU-DU distributed architecture and a CU-DU fusion architecture. The benefits of the wireless network CU-DU architecture are that it may obtain inter-cell collaboration gains and realize centralized load management; it may efficiently realize centralized control under dense networking, such as multiple connections and dense handover; and it may obtain pooling gains and enable network functions virtualization (NFV)/software defined network (SDN) to meet deployment requirements of certain 5G scenarios for operators. In terms of device implementation, CU and DU deployment methods may be flexibly selected in two ways, namely the CU-DU distributed architecture and the CU-DU fusion architecture. In the CU-DU distributed architecture, the CU and the DU are deployed on separate devices and communicate through the F1 interface; in the CU-DU fusion architecture, the CU and the DU are integrated in a same physical device, and the F1 interface becomes an internal interface of the device. In case of the CU-DU distributed architecture, the CU and the DU are deployed at different servers, and the CU and the DU are connected via IP. However, in case that a DU currently providing services to the terminal cannot know a corresponding TA value when the terminal accesses other DUs, when the terminal needs to switch to other DUs, it needs to obtain the corresponding TA value by initiating a random access procedure, resulting in a large delay in the layer 1 (L1) and layer 2 (L2) mobility. In order to reduce the mobility delay and avoid initiating random access to obtain the corresponding TA value, the present application provides a method for TA transfer, which may send the TA value corresponding to a candidate DU to a currently serving DU through the corresponding interface, and forward it to the terminal through the current serving DU, thereby avoiding the above-mentioned problems.

The DU currently providing a service to the terminal is referred to as the serving DU, and other DUs that may provide services to the terminal are referred to as candidate DUs. The terminal may connect to the target CU through the serving DU or the candidate DU, and access the core network through the target CU. The method for TA transfer provided by the embodiments of the present application is applicable to all terminals. To simplify the description, the specific procedure of how a terminal (i.e., the target terminal), the DU providing services for the terminal, other candidate DUs, and the target CU perform TA transfer to avoid the terminal initiating a random access procedure to access the candidate DU is described.

Each DU corresponds to one or more cells, all of which may provide services for the terminal. After detecting the TA value corresponding to the target terminal, the candidate DU sends the TA value to the DU currently providing service for the target terminal through the first message. The TA value here includes the TA value corresponding to each of the one or more candidate cells corresponding to the candidate DU that the terminal accesses. Some of the TA values can be selected for reporting during the reporting procedure based on actual needs. The corresponding transmission way may adopt real-time transmission or non-real-time transmission. When non-real-time transmission is adopted, the signaling interaction between interfaces may be further reduced. When the TA value is sent in non-real time, the TA value corresponding to the candidate DU may change based on a movement of the terminal, or the terminal is originally within a coverage of all candidate cells of the candidate DU, after the terminal moves, the terminal is only within a coverage of some candidate cells of the candidate DU. Therefore, the candidate DU may also report the updated TA value to the target CU by periodic reporting or non-periodic multiple reporting to ensure that the TA value of the candidate cell corresponding to each candidate DU obtained by the target CU side is valid.

In the method for TA transfer provided by the embodiment of the present application, the TA value corresponding to each candidate cell calculated by the candidate DU is sent to the CU in a real-time/non-real-time transmission way, and the TA value is forwarded to the serving DU, which is beneficial for the serving DU to obtain the TA value calculated by other candidate DUs and configure the TA value to the terminal, reduces the signaling interaction between interfaces, and reduces the L1 and L2 mobility delays and transmission delays.

In an embodiment, in case that the first message contains the TA value of the first candidate cell for the target terminal, the first message includes one or more of the following:
identification information of the target terminal;
identifier information of the first candidate cell;
frequency information of the first candidate cell;
indication information for an uplink signal beam corresponding to the first candidate cell;
indication information for the TA value, where the indication information is used to indicate whether the first message contains the TA value; or
a TA value corresponding to the first candidate cell.

In an embodiment, the candidate DU reports the TA value of the first candidate cell for the target terminal in real time, and the configuration parameters corresponding to the first message may include one or more of the following:
identification information of the target terminal, indicating which terminal is the target terminal, or a corresponding relationship between the candidate DU and the target terminal;
identifier information of the first candidate cell, indicating the identifiers corresponding to all candidate cells included in the candidate DU, which is used for the terminal to determine which candidate cell to access during the access procedure, and may be represented in multiple ways, such as a customized cell identifier (ID), a universal cell global identifier (CGI), etc., only the uniqueness of each candidate cell needs to be ensured;
frequency information of the first candidate cell, which is used for the terminal to obtain the frequency information corresponding to each candidate cell during the access procedure;
indication information for an uplink signal beam corresponding to each candidate cell, indicating that there may be multiple uplink signal beams corresponding to one candidate cell; during the access procedure, the terminal may determine the access procedure, a transmission channel to be adopted, time-frequency resources and other information in a finer granularity way; that is, the indication information for the first candidate cell, the frequency information of the first candidate cell and the indication information for the uplink signal beam corresponding to the first candidate cell are in a progressive manner, and specific information corresponding to the candidate cell when the terminal accesses is determined by different granularities.
indication information for the TA value, used to indicate whether the first message contains a TA value, that is, whether the first message includes a TA value corresponding to the first candidate cell; or
a TA value corresponding to the first candidate cell, indicating the TA values corresponding to one or more candidate cells included in the first candidate cell; in an embodiment, in case that the indication information for the TA value indicates that the first message does not contain a TA value, the field may be empty; in case that the indication information for the TA value indicates that the first message contains a TA value, the field includes the TA values corresponding to one or more candidate cells.

In the method for TA transfer provided by the embodiments of the present application, in case that the candidate DU sends the TA value of each candidate cell in the candidate DU that the terminal accesses to the CU through the first message, the terminal may be provided with indication information more flexibly by containing multiple types of parameters, and the terminal may be indicated to determine the corresponding resource information from different granularities.

In an embodiment, the identifier information of the first candidate cell is any one of a customized cell identifier, a new radio cell global identifier, a physical cell identifier, or a cell global identifier.

In an embodiment, the identifier information of the first candidate cell may be represented by any one of the following ways:
a customized cell ID, which is set based on system requirements, as long as the uniqueness of each cell is ensured;
a new radio cell global identifier (NCGI), which is composed of a public land mobile network (PLMN) identifier to which the cell belongs and a new radio (NR) cell identifier (NCI) of the cell; and a base station may be uniquely determined by NCGI;
a physical cell identifier (PCI), which is mainly used to distinguish radio signals of different cells in long term evolution (LTE), and ensure that there is no identical physical cell identifier within the coverage of the associated cell; or
a cell global identifier (CGI), used to identify an area covered by a cell (a base station/a sector cell).

In an embodiment, in case that the first message contains the TA value of the specified candidate cell for the target terminal, the first message includes one or more of the following:
identification information of the target terminal;
identifier information of the specified candidate cell;
frequency information of the specified candidate cell;
indication information for an uplink signal beam corresponding to the specified candidate cell;
indication information for the TA value, where the indication information is used to indicate whether the first message contains the TA value; or
a TA value corresponding to the specified candidate cell.

In an embodiment, the candidate DU reports the corresponding TA value in a non-real-time transmission way, and the target CU sends reporting configuration information or a first request message to the candidate DU. Both the reporting configuration information and the first request message include information of the specified candidate cell. When reporting the TA value, the candidate DU reports the TA value corresponding to the terminal accessing these candidate cells according to the specified candidate cell information.

The candidate DU also sends the TA value of the specified candidate cell for the terminal through the first message in the non-real-time transmission way.

The first message may include one or more of the following:
identification information of the target terminal;
identifier information of the specified candidate cell;
frequency information of the specified candidate cell;
indication information for an uplink signal beam corresponding to the specified candidate cell;
indication information for the TA value, where the indication information is used to indicate whether the first message contains the TA value; or
a TA value corresponding to the specified candidate cell.

The meanings of the above fields are the same as those in the first message sent when the candidate DU reports the TA value in real-time transmission way, and can achieve the same technical effect, which is not repeated here.

In an embodiment, the identifier information of the specified candidate cell is any one of a customized cell identifier, a new radio cell global identifier, a physical cell identifier, or a cell global identifier.

In an embodiment, the identifier information of the specified candidate cell may be represented in a variety of ways, such as:
a customized cell ID, which is set based on a system requirement, and only the uniqueness of each cell needs to be ensured; or
a new radio cell global identifier, which is composed of the PLMN identifier to which the cell belongs and the NR cell identifier (NCI) of the cell; and a base station may be uniquely determined by NCGI; or
a physical cell identifier (PCI), which is mainly used to distinguish radio signals of different cells in LTE, and ensure that there is no identical physical cell identifier within the coverage of the associated cell; or
a cell global identifier (CGI), used to identify an area covered by a cell (a base station/a sector cell).

In an embodiment, the indication information for the uplink signal beam includes one or more of the following:
a beam index of the uplink signal beam;
a transmission configuration indicator index of the uplink signal beam;
a spatial relation corresponding to the uplink signal beam.

In an embodiment, the indication information for the uplink signal beam includes any one or more of the following:
a beam index of the uplink signal beam, which is equivalent to numbering each beam to distinguish different beams;
a transmission configuration indicator (TCI) index of the uplink signal beam, used to inform the terminal to receive the same downlink transmission beam of the base station shared by the physical downlink control channel (PDCCH) or the physical downlink shared channel (PDSCH) and the channel state information reference signal (CSI-RS); or to inform the user to send the physical uplink control channel (PUCCH)/physical uplink shared channel (PUSCH) and the sounding reference signal (SRS) using the same uplink transmission beam;
a spatial relation corresponding to the uplink signal beam, used to indicate the information of the spatial resources corresponding to the beam, such as a spatial angle.

In an embodiment, before sending the first message to the target CU, the method includes:
receiving a reporting configuration message sent from the target CU, where the reporting configuration message is used to configure a reporting rule of the candidate DU reporting the TA value of the specified candidate cell for the target terminal;
   or,
receiving a first request message sent from the target CU, where the first request message is used to obtain a first TA value determined by the candidate DU from the candidate DU, and the first TA value is a TA value of the specified candidate cell for the target terminal.

In an embodiment, before the candidate DU sends the first message in the non-real-time transmission way, the target CU sends the corresponding reporting configuration information to the candidate DU. The candidate DU actively reports based on the reporting configuration information, or sends a first request message to the candidate DU at a moment when it is necessary, and the target CU obtains the TA value corresponding to each candidate cell detected by the candidate DU from the candidate DU.

The above-mentioned sending the reporting configuration information indicates the reporting rules for the candidate DU to report the first message, the TA values corresponding to which cells need to be reported, etc.

The target CU sends the first request message to the candidate DU, and obtains the TA value corresponding to one or more candidate cells in the first candidate cell from the candidate DU.

In an embodiment, the reporting configuration message includes one or more of the following:
identification information of the target terminal;
identifier information of the specific candidate cell;
frequency information of the specified candidate cell;
a TA reporting period, where the TA reporting period is a positive integer multiple of a measurement period of an uplink reference signal;
a TA reporting number threshold, used to indicate that to report a TA value for a last time the DU performs measurement to obtain TA values after a number of times the candidate DU performs measurement to obtain TA values reaches the TA reporting number threshold; or
a TA reporting format, used to indicate a representation way of a TA value for a TA reporting.

In an embodiment, the reporting configuration message sent from the target CU to the candidate DU may include multiple fields, indicating different information respectively, and may specifically include one or more of the following:
identification information of the target terminal, used to indicate which terminal is the target terminal, or a corresponding relationship between the candidate DU and the target terminal;
identifier information of the specified candidate cell, indicating an identifier of one or more candidate cells in all the candidate cells included in the candidate DU, that is, whether to report all candidate cells corresponding to the candidate DU or some candidate cells is determined, and indicating which cells to be reported in the partial reporting case;
frequency information of the specified candidate cell, used to indicate the terminal to obtain the frequency information corresponding to each candidate cell during the access procedure;
a TA reporting period, where the TA reporting period is a positive integer multiple of a measurement period of the uplink reference signal, that is, the terminal sends the uplink reference signal periodically, and the candidate DU monitors the uplink reference signal periodically, such as a period of T, and when the candidate DU reports the TA value calculated based on the uplink reference signal, it can be reported with a period same as the period T, or it can be reported once every several periods of T, that is, it can be reported with a period of nT (n≥2), which is equivalent to that the period of candidate DU reporting TA value may be T or nT;
a TA reporting number threshold, used to indicate that to report a TA value for a last time the DU performs measurement to obtain TA values after a number of times the candidate DU performs measurement to obtain TA values reaches the TA reporting number threshold; the terminal periodically sends the uplink reference signal, and the candidate DU periodically monitors the uplink reference signal; the uplink reference signal may not be monitored in every period; therefore, a reporting number threshold is set, that is, the candidate DU reports only after the number of times the candidate DU calculating the TA values based on the uplink reference signal reaches the threshold; or
a TA reporting format, used to indicate a representation way of the TA value for a TA reporting, that is, the reported TA value may be an actual measurement value, a relative value, or indication information used to indicate a specific TA value.

In an embodiment, the TA reporting format includes any one of the following:
reporting a TA measurement value;
reporting a change amount in a TA measurement value, where the change amount in the TA measurement value is a difference between a TA measurement value at a current moment and a given reference value, or a difference between a TA measurement value at a current moment and a TA measurement value at a previous moment; or
reporting an index corresponding to a TA measurement value in a given TA value list, where the given TA value list stores different measurement value intervals of TA value and indexes corresponding to each of the measurement value intervals.

In an embodiment, the TA reporting format included in the reporting configuration message is used to indicate the form in which the candidate DU reports the TA measurement value. The TA measurement value may be directly reported, or a relative value may be reported, or indication information used to indicate a specific TA value may be reported.

To directly report the TA measurement value is to report the TA measurement value as it is.

To report the change amount in the TA measurement value, that is, to report the relative value, where the reference value here may be a given TA value of a candidate cell; or a preset reference value may be set for each candidate cell. It is also possible that the relative value is a difference between a TA measurement value at a current moment and a TA measurement value at a previous moment.

To report the indication information used to indicate a specific TA value is to report the index corresponding to the TA measurement value in the given TA value list, which stores different measurement value intervals of TA value and indexes corresponding to each of the measurement value intervals. For example, the given TA value list is shown in Table 1. The TA value corresponding to the candidate cell A measured by the candidate DU is d, and the TA value corresponding to the candidate cell B is e, where 0<a<d<b<e<c. The TA reporting format for the candidate cell A of the candidate DU may be expressed as M1, and the TA reporting format for the candidate cell B of the candidate DU may be expressed as M3.

**Table 1 Given TA value list**

| Measurement value intervals of TA value | Index of TA value |
|---|---|
| [0,a] | M1 |
| (a,b] | M2 |
| (b,c] | M3 |

In an embodiment, the first request message includes one or more of the following:
identification information of the target terminal;
identifier information of the specific candidate cell;
frequency information of the specified candidate cell; or
a TA request identifier, used to indicate that a TA value of a candidate cell for the target terminal is obtained in a unit of a single candidate cell.

In an embodiment, the way of the target CU obtaining the TA value of the terminal in each candidate cell in the candidate DU may be sending a reporting configuration message to make the candidate DU report actively, or may be sending a first request message to the candidate DU, when the information is needed, to obtain the TA value of the terminal in each candidate cell in the candidate DU.

The first request message may include any one or more of the following:
identification information of the target terminal, used to indicate which terminal is the target terminal, or a corresponding relationship between the candidate DU and the target terminal;
identifier information of the specified candidate cell, indicating an identifier of one or more candidate cells in all the candidate cells included in the candidate DU, that is, whether to report all candidate cells corresponding to the candidate DU or some candidate cells is determined, and indicating which cells to be reported in the partial reporting case;
frequency information of the specified candidate cell, used to indicate the terminal to obtain the frequency information corresponding to each candidate cell during the access procedure; or
a TA request identifier, used to indicate that a TA value of a candidate cell for the target terminal is obtained in a unit of a single candidate cell; in an embodiment, when only this item is included in the first request message, the TA request identifier may be directly used to determine the TA value corresponding to which candidate cell needs to be reported.

In an embodiment, the first message is an improved F1 interface message, or a customized F1 interface message; and the improved F1 interface message is obtained by expanding an original F1 interface message.

In an embodiment, the first message is an expansion of the original F1 interface message, and on the basis of the original F1 interface message, one or more of the identifier of the target terminal, the identifier information of the first candidate cell, the frequency information of the first candidate cell, the indication information for the uplink signal beam corresponding to the first candidate cell, the indication information for the TA value, or the TA value corresponding to the first candidate cell are added.

The original F1 interface message is, for example, UE CONTEXT SETUP RESPONSE, UE CONTEXT MODIFICATION REQUIRED, or UE CONTEXT MODIFICATION RESPONSE, etc.

The first message may also be a customized F1 interface message, and the customized F1 interface message includes one or more of the identifier of the target terminal, the identifier information of the first candidate cell, the frequency information of the first candidate cell, the indication information for the uplink signal beam corresponding to the first candidate cell, the indication information for the TA value, or the TA value corresponding to the first candidate cell. The TA value of the terminal in each candidate cell of the candidate DU is sent to the target CU. The original F1 interface message may be fully utilized without occupying too many resources, and the same function may be achieved through the customized F1 interface message, which is more flexible.

In the method for TA transfer provided by the embodiments of the present application, the TA value calculated by the candidate DU is sent to the CU through the first message in the real-time/non-real-time transmission way, and is forwarded to the serving DU, which is conducive to the serving DU obtaining the TA value calculated by other candidate DUs and configuring it to the terminal, reducing the signaling interaction between interfaces, and reducing the L1 and L2 mobility delays and transmission delays.

FIG. 2 is a second schematic flowchart of a method for TA transfer according to an embodiment of the present application. As shown in FIG. 2, the method is performed by a serving distributed unit (DU), and includes:
step 201: sending a second request message to a target centralized unit (CU) to obtain a first TA value determined by a candidate DU, where the first TA value is a TA value of a specified candidate cell for a target terminal,
where the specified candidate cell is one or more of first candidate cells, the first candidate cell is a candidate cell corresponding to the candidate DU, and the target CU stores first TA values determined by all candidate DUs.

In an embodiment, after the candidate DU reports the TA values corresponding the target terminal in each candidate cell to the target CU through the first message, in case that the candidate DU adopts a real-time transmission way, the target CU immediately forwards the information to the DU currently providing services to the terminal after receiving it; in case that the candidate DU adopts a non-real-time transmission way, the serving DU may send a second request to the target CU to obtain the information.

The serving DU may request to obtain the TA values corresponding to all candidate cells of the candidate DU, and may also request to obtain the TA values corresponding to some candidate cells of the candidate DU, that is, the candidate cells for which the TA values need to be obtained may be included in the second request message, and the TA value corresponding to the specified candidate cell of the candidate DU is obtained.

All candidate cells corresponding to the candidate DU are collectively referred to as first candidate cells. The above-mentioned specified candidate cell is one or more of the first candidate cells. The target CU receives the TA values corresponding to each candidate cell in the first candidate cells reported by all candidate DUs.

In the method for TA transfer provided by the embodiments of the present application, the TA value calculated by the candidate DU is sent to the CU through the first message in the real-time/non-real-time transmission way, and is forwarded to the serving DU, which is conducive to the serving DU obtaining the TA value calculated by other candidate DUs and configuring it to the terminal, reducing the signaling interaction between interfaces, and reducing the L1 and L2 mobility delays and transmission delays.

In an embodiment, the second request message includes any one or more of the following:
identification information of the target terminal;
identifier information of the specific candidate cell;
frequency information of the specified candidate cell; or
a TA request identifier, used to indicate that a TA value of a candidate cell for the target terminal is obtained in a unit of a single candidate cell.

In an embodiment, the second request message sent from the serving DU to the target CU may include one or more of the following:
identification information of the target terminal, used to indicate which terminal is the target terminal, or a corresponding relationship between the candidate DU and the target terminal;
identifier information of the specified candidate cell, indicating an identifier of one or more candidate cells in all the candidate cells included in the candidate DU, that is, whether to report all candidate cells corresponding to the candidate DU or some candidate cells is determined, and indicating which cells to be reported in the partial reporting case;
frequency information of the specified candidate cell, used to indicate the terminal to obtain the frequency information corresponding to each candidate cell during the access procedure; or
a TA request identifier, used to indicate that a TA value of a candidate cell for the target terminal is obtained in a unit of a single candidate cell; in an embodiment, when only this item is included in the first request message, the TA request identifier may be directly used to determine the TA value corresponding to which candidate cell needs to be reported.

In an embodiment, the identifier information of the specified candidate cell is any one of a customized cell identifier, a new radio cell global identifier, a physical cell identifier, or a cell global identifier.

In an embodiment, the identifier information of the specified candidate cell may be represented in a variety of ways, such as:
a customized cell ID, which is set based on a system requirement, and only the uniqueness of each cell needs to be ensured; or
a new radio cell global identifier, which is composed of the PLMN identifier to which the cell belongs and the NR cell identifier (NCI) of the cell; and a base station may be uniquely determined by NCGI; or
a physical cell identifier (PCI), which is mainly used to distinguish radio signals of different cells in LTE, and ensure that there is no identical physical cell identifier within the coverage of the associated cell; or
a cell global identifier (CGI), used to identify an area covered by a cell (a base station/a sector cell).

In an embodiment, the second request message is sent through an improved F1 interface message or a customized F1 interface message, and the improved F1 interface message is obtained by expanding an original F1 interface message.

In an embodiment, the second request message is an expansion of an original F1 interface message. On the basis of the original F1 interface message, one or more of the identifier of the target terminal, the identifier information of the first candidate cell, the frequency information of the first candidate cell, the indication information for the uplink signal beam corresponding to the first candidate cell, the indication information for the TA value, or the TA value corresponding to the first candidate cell are added.

The original F1 interface message is, for example, UE CONTEXT MODIFICATION REQUEST, etc.

The second message may also be a customized F1 interface message, and the customized F1 interface message includes one or more of the identifier of the target terminal, the identifier information of the first candidate cell, the frequency information of the first candidate cell, the indication information for the uplink signal beam corresponding to the first candidate cell, the indication information for the TA value, or the TA value corresponding to the first candidate cell. The TA value of the terminal in each candidate cell of the candidate DU is sent to the target CU. The original F1 interface message may be fully utilized without occupying too many resources, and the same function may be achieved through the customized F1 interface message, which is more flexible.

In the method for TA transfer provided by the embodiments of the present application, the TA value calculated by the candidate DU is sent to the CU through the first message in the real-time/non-real-time transmission way, and is forwarded to the serving DU, which is conducive to the serving DU obtaining the TA value calculated by other candidate DUs and configuring it to the terminal, reducing the signaling interaction between interfaces, and reducing the L1 and L2 mobility delays and transmission delays.

FIG. 3 is a third schematic flowchart of a method for TA transfer according to an embodiment of the present application. As shown in FIG. 3, the method is performed by a target centralized unit (CU), and the method includes:
step 301: receiving a first message sent from a candidate distributed unit (DU);
step 302: determining, based on the first message, a TA value of a first candidate cell for a target terminal, or a TA value of a specified candidate cell for a target terminal; where
the first message contains the TA value of the first candidate cell for the target terminal, or contains the TA value of the specified candidate cell for the target terminal; and
the first candidate cell is a candidate cell corresponding to the candidate DU, and the specified candidate cell is one or more of first candidate cells.

In an embodiment, the target CU may receive the TA value, actively reported by the candidate DU, corresponding to the terminal when accessing the first candidate cell corresponding to the candidate DU, or send a first request message to obtain the TA value, determined by the candidate DU, corresponding to the terminal when accessing the first candidate cell corresponding to the candidate DU.

In case that the candidate DU actively reports, the candidate DU adopts a real-time transmission way and reports the TA value of the first candidate cell for the target terminal through the first message.

In case that the candidate DU receives the first request message sent from the target CU, it may be required in the first request message that the candidate DU report the TA value for the specified candidate cell, and the specified candidate cell is one or more of the first candidate cells. The candidate DU adopts a non-real-time transmission way and reports the TA value of the specified candidate cell for the target terminal through the first message. The target CU receives the above TA value information reported by the candidate DU and may store it so that the subsequent serving DU may obtain the TA value of one or some candidate cells for the target terminal from the target CU.

In the method for TA transfer provided by the embodiments of the present application, the TA value corresponding to each candidate cell calculated by the candidate DU is sent to the CU through the first message in the real-time/non-real-time transmission way, and is forwarded to the serving DU, which is conducive to the serving DU obtaining the TA value calculated by other candidate DUs and configuring it to the terminal, reducing the signaling interaction between interfaces, and reducing the L1 and L2 mobility delays and transmission delays.

In an embodiment, in case that the first message contains the TA value of the specified candidate cell for the target terminal, before receiving the first message sent from the candidate DU, the method includes:
sending a reporting configuration message to the candidate DU, where the reporting configuration message is used to configure a reporting rule of the candidate DU reporting the TA value of the specified candidate cell for the target terminal; or
sending a first request message to the candidate DU, where the first request message is used to obtain a TA value of the specified candidate cell for the target terminal determined by the candidate DU.

In an embodiment, before obtaining the TA value of the specified candidate cell for the target terminal reported by the candidate DU, the target CU may obtain the TA value of the specified candidate cell for the target terminal determined by the candidate DU in two ways of sending a reporting configuration message or sending a first request message for reporting. The specified candidate cell is one or more of the first candidate cells, and the first candidate cells are all candidate cells corresponding to the candidate DU.

In case of sending the reporting configuration message, the reporting configuration message is for the candidate DU to actively report the TA value of the specified candidate cell for the target terminal. Or when necessary, the first request message is sent to the candidate DU to obtain the TA value of the specified candidate cell for the target terminal determined by the candidate DU.

In an embodiment, the reporting configuration message includes one or more of the following:
identification information of the target terminal;
identifier information of the specific candidate cell;
frequency information of the specified candidate cell;
a TA reporting period, where the TA reporting period is a positive integer multiple of a measurement period of an uplink reference signal;
a TA reporting number threshold, used to indicate that to report a TA value for a last time the DU performs measurement to obtain TA values after a number of times the candidate DU performs measurement to obtain TA values reaches the TA reporting number threshold; or
a TA reporting format, used to indicate a representation way of a TA value for a TA reporting.

In an embodiment, the reporting configuration message sent from the target CU to the candidate DU may include multiple fields, indicating different information respectively, and may specifically include one or more of the following:
identification information of the target terminal, used to indicate which terminal is the target terminal, or a corresponding relationship between the candidate DU and the target terminal;
identifier information of the specified candidate cell, indicating an identifier of one or more candidate cells in all the candidate cells included in the candidate DU, that is, whether to report all candidate cells corresponding to the candidate DU or some candidate cells is determined, and indicating which cells to be reported in the partial reporting case;
frequency information of the specified candidate cell, used to indicate the terminal to obtain the frequency information corresponding to each candidate cell during the access procedure;
a TA reporting period, where the TA reporting period is a positive integer multiple of a measurement period of the uplink reference signal, that is, the terminal sends the uplink reference signal periodically, and the candidate DU monitors the uplink reference signal periodically, such as a period of T, and when the candidate DU reports the TA value calculated based on the uplink reference signal, it can be reported with a period same as the period T, or it can be reported once every several periods of T, that is, it can be reported with a period of nT (n≥2), which is equivalent to that the period of candidate DU reporting TA value may be T or nT;
a TA reporting number threshold, used to indicate that to report a TA value for a last time the DU performs measurement to obtain TA values after a number of times the candidate DU performs measurement to obtain TA values reaches the TA reporting number threshold; the terminal periodically sends the uplink reference signal, and the candidate DU periodically monitors the uplink reference signal; the uplink reference signal may not be monitored in every period; therefore, a reporting number threshold is set, that is, the candidate DU reports only after the number of times the candidate DU calculating the TA values based on the uplink reference signal reaches the threshold; or
a TA reporting format, used to indicate a representation way of the TA value for a TA reporting, that is, the reported TA value may be an actual measurement value, a relative value, or indication information used to indicate a specific TA value.

In an embodiment, the TA reporting format includes any one of the following:
reporting a TA measurement value;
reporting a change amount in a TA measurement value, where the change amount in the TA measurement value is a difference between a TA measurement value at a current moment and a given reference value, or a difference between a TA measurement value at a current moment and a TA measurement value at a previous moment; or
reporting an index corresponding to a TA measurement value in a given TA value list, where the given TA value list stores different measurement value intervals of TA value and indexes corresponding to each of the measurement value intervals.

In an embodiment, the TA reporting format included in the reporting configuration message is used to indicate the form in which the candidate DU reports the TA measurement value. The TA measurement value may be directly reported, or a relative value may be reported, or indication information used to indicate a specific TA value may be reported.

To directly report the TA measurement value is to report the TA measurement value as it is.

To report the change amount in the TA measurement value, that is, to report the relative value, where the reference value here may be a given TA value of a candidate cell; or a preset reference value may be set for each candidate cell. It is also possible that the relative value is a difference between a TA measurement value at a current moment and a TA measurement value at a previous moment.

To report the indication information used to indicate a specific TA value is to report the index corresponding to the TA measurement value in the given TA value list, which stores different measurement value intervals of TA value and indexes corresponding to each of the measurement value intervals. For example, the given TA value list is shown in Table 2. The TA value corresponding to the candidate cell A measured by the candidate DU is d, and the TA value corresponding to the candidate cell B is e, where 0<a<d<b<e<c. The TA reporting format for the candidate cell A of the candidate DU may be expressed as M1, and the TA reporting format for the candidate cell B of the candidate DU may be expressed as M3.

**Table 2 Given TA value list**

| Measurement value intervals of TA value | Index of TA value |
|---|---|
| [0,a] | M1 |
| (a,b] | M2 |
| (b,c] | M3 |

In an embodiment, the first request message includes one or more of the following:
identification information of the target terminal;
identifier information of the specific candidate cell;
frequency information of the specified candidate cell; or
a TA request identifier, used to indicate that a TA value of a candidate cell for the target terminal is obtained in a unit of a single candidate cell.

In an embodiment, the way of the target CU obtaining the TA value of the terminal in each candidate cell in the candidate DU may be sending a reporting configuration message to make the candidate DU report actively, or may be sending a first request message to the candidate DU, when the information is needed, to obtain the TA value of the terminal in each candidate cell in the candidate DU.

The first request message may include any one or more of the following:
identification information of the target terminal, used to indicate which terminal is the target terminal, or a corresponding relationship between the candidate DU and the target terminal;
identifier information of the specified candidate cell, indicating an identifier of one or more candidate cells in all the candidate cells included in the candidate DU, that is, whether to report all candidate cells corresponding to the candidate DU or some candidate cells is determined, and indicating which cells to be reported in the partial reporting case;
frequency information of the specified candidate cell, used to indicate the terminal to obtain the frequency information corresponding to each candidate cell during the access procedure; or
a TA request identifier, used to indicate that a TA value of a candidate cell for the target terminal is obtained in a unit of a single candidate cell; in an embodiment, when only this item is included in the first request message, the TA request identifier may be directly used to determine the TA value corresponding to which candidate cell needs to be reported.

In an embodiment, the specified candidate cell is determined based on the identifier information of the specified candidate cell, and the identifier information of the specified candidate cell is any one of a customized cell identifier, a new radio cell global identifier, a physical cell identifier, or a cell global identifier.

In an embodiment, the identifier information of the specified candidate cell may be represented in a variety of ways, such as:
a customized cell ID, which is set based on a system requirement, and only the uniqueness of each cell needs to be ensured; or
a new radio cell global identifier, which is composed of the PLMN identifier to which the cell belongs and the NR cell identifier (NCI) of the cell; and a base station may be uniquely determined by NCGI; or
a physical cell identifier (PCI), which is mainly used to distinguish radio signals of different cells in LTE, and ensure that there is no identical physical cell identifier within the coverage of the associated cell; or
a cell global identifier (CGI), used to identify an area covered by a cell (a base station/a sector cell).

In an embodiment, the first candidate cell is all candidate cells corresponding to the candidate DU, and is determined based on the identifier information of the first candidate cell, where the identifier information of the first candidate cell is any one of a customized cell identifier, a new radio cell global identifier, a physical cell identifier, or a cell global identifier.

In an embodiment, the identifier information of the first candidate cell may be represented in a variety of ways, such as:
a customized cell ID, which is set based on a system requirement, and only the uniqueness of each cell needs to be ensured; or
a new radio cell global identifier, which is composed of the PLMN identifier to which the cell belongs and the NR cell identifier (NCI) of the cell; and a base station may be uniquely determined by NCGI; or
a physical cell identifier (PCI), which is mainly used to distinguish radio signals of different cells in LTE, and ensure that there is no identical physical cell identifier within the coverage of the associated cell; or
a cell global identifier (CGI), used to identify an area covered by a cell (a base station/a sector cell).

In an embodiment, the first message is an improved F1 interface message, or a customized F1 interface message; and the improved F1 interface message is obtained by expanding an original F1 interface message.

In an embodiment, the first message is an expansion of the original F1 interface message, and on the basis of the original F1 interface message, one or more of the identifier of the target terminal, the identifier information of the first candidate cell, the frequency information of the first candidate cell, the indication information for the uplink signal beam corresponding to the first candidate cell, the indication information for the TA value, or the TA value corresponding to the first candidate cell are added.

The original F1 interface message is, for example, UE CONTEXT SETUP RESPONSE, UE CONTEXT MODIFICATION REQUIRED, or UE CONTEXT MODIFICATION RESPONSE, etc.

The first message may also be a customized F1 interface message, and the customized F1 interface message includes one or more of the identifier of the target terminal, the identifier information of the first candidate cell, the frequency information of the first candidate cell, the indication information for the uplink signal beam corresponding to the first candidate cell, the indication information for the TA value, or the TA value corresponding to the first candidate cell. The TA value of the terminal in each candidate cell of the candidate DU is sent to the target CU. The original F1 interface message may be fully utilized without occupying too many resources, and the same function may be achieved through the customized F1 interface message, which is more flexible.

In the method for TA transfer provided by the embodiments of the present application, the TA value calculated by the candidate DU is sent to the CU through the first message in the real-time/non-real-time transmission way, and is forwarded to the serving DU, which is conducive to the serving DU obtaining the TA value calculated by other candidate DUs and configuring it to the terminal, reducing the signaling interaction between interfaces, and reducing the L1 and L2 mobility delays and transmission delays.

The method for TA transfer provided by the embodiments of the present application is described below with several specific examples.

Case 1: a candidate DU sends a TA value in a real-time transmission way.

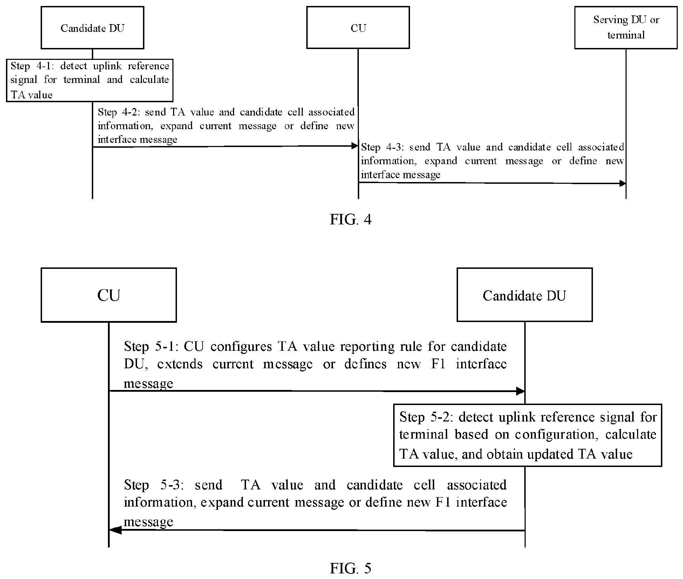

Example 1-1. FIG. 4 is a first schematic flowchart of an implementation of a method for TA transfer according to an embodiment of the present application. The candidate DU sends the TA value in the real-time transmission way. The following steps are shown in FIG. 4.

Step 4-1: after calculating a TA value, the candidate DU reports information associated with the TA value to a CU through a F1 interface.

Step 4-2: a message for the candidate DU to report the information associated with the TA value to the CU may reuse a current interface message, such as UE CONTEXT SETUP RESPONSE, UE CONTEXT MODIFICATION REQUIRED, or UE CONTEXT MODIFICATION RESPONSE; or a new interface message may be defined. The above interface message includes at least one piece of the following information:
a terminal (UE) identifier and other information;
a customized cell ID for a candidate cell;
NCGI information for a candidate cell;
PCI information for a candidate cell;
CGI information for a candidate cell;
frequency information for a candidate cell;
a TA value for a candidate cell, which is explicitly included in the above interface message, and may also be implicitly included in an information element (IE) in the above message;
a TA value indication identifier, used to indicate a TA value for a candidate cell carried in the message;
a beam index for a detected uplink signal beam in a candidate cell;
a TCI index for a detected uplink signal beam in a candidate cell; or
a beam spatial relation in a candidate cell.

Step 4-3: the CU may reuse the current interface message to send the TA value and candidate cell associated information to a serving DU or a UE, such as UE CONTEXT SETUP RESPONSE, UE CONTEXT MODIFICATION REQUIRED, UE CONTEXT MODIFICATION RESPONSE, or DL RRC MESSAGE TRANSFER; or a new interface message may be defined. The above interface message includes at least one piece of the following information:
a UE identifier and other information;
a customized cell ID for a candidate cell;
NCGI information for a candidate cell;
PCI information for a candidate cell;
CGI information for a candidate cell;
frequency information for a candidate cell;
a TA value for a candidate cell, which is explicitly included in the above interface message, and may also be implicitly included in an IE in the above message;
a TA value indication identifier, used to indicate a TA value for a candidate cell carried in the message;
a beam index for a detected uplink signal beam in a candidate cell;
a TCI index for a detected uplink signal beam in a candidate cell; or
a beam spatial relation in a candidate cell.

Case 2: a candidate DU sends a TA value in a non-real-time transmission way.

Example 2-1. FIG. 5 is a second schematic flowchart of an implementation of a method for TA transfer according to an embodiment of the present application. A reporting rule is preconfigured. The following steps are shown in FIG. 5.

Step 5-1: a CU configures a TA reporting rule for a candidate cell of the candidate DU, which may be reporting a TA value periodically or reporting once every N measurements. The configuration way may be expanding an original F1 interface message, such as UE CONTEXT SETUP RESPONSE, UE CONTEXT MODIFICATION REQUIRED, or UE CONTEXT MODIFICATION RESPONSE; or a new interface message may be defined. At least one piece of the following information should be included:
a UE identifier and other information;
a customized cell ID for a candidate cell;
NCGI information for a candidate cell;
PCI information for a candidate cell;
CGI information for a candidate cell;
frequency information for a candidate cell;
a TA reporting format;
a TA reporting period;
a TA reporting number threshold;

Step 5-2: the candidate DU calculates a TA based on the configuration, and the TA value is temporarily stored in the candidate DU. When a latest TA value is calculated, a new TA value replaces an old TA value.

Step 5-3: a message for the candidate DU to report the TA value associated information may reuse a current interface message, such as UE CONTEXT SETUP RESPONSE, UE CONTEXT MODIFICATION REQUIRED, or UE CONTEXT MODIFICATION RESPONSE; or a new interface message may be defined. The message should include at least one or more pieces of the following information:
a UE identifier and other information;
a customized cell ID for a candidate cell;
PCI information for a candidate cell;
CGI information for a candidate cell;
frequency information for a candidate cell;
a TA value for a candidate cell, which is explicitly included in the above interface message, and may also be implicitly included in an IE in the above message;
a TA value indication identifier, used to indicate a TA value for a candidate cell carried in the message;
a beam index for a detected uplink signal beam in a candidate cell;
a TCI index for a detected uplink signal beam in a candidate cell; or
a beam spatial relation in a candidate cell.

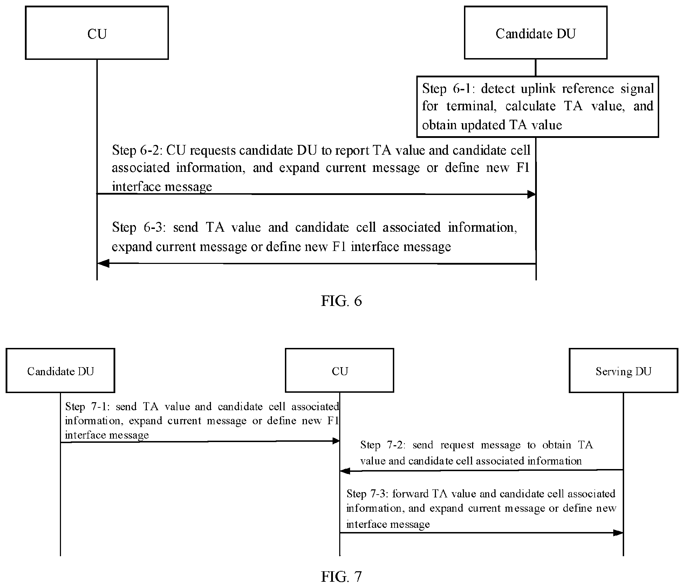

Example 2-2. FIG. 6 is a third schematic flowchart of an implementation of a method for TA transfer according to an embodiment of the present application. A CU sends a first request message to a candidate DU to obtain a corresponding TA value. The following steps are shown in FIG. 6.

Step 6-1: the candidate DU calculates a TA based on the configuration, and the TA value is temporarily stored in the candidate DU. When a latest TA value is calculated, a new TA value replaces an old TA value.

Step 6-2: the CU requests a candidate cell of the candidate DU to report the TA value and other information. The request way may be expanding an original F1 interface message, such as UE CONTEXT MODIFICATION REQUEST; or a new interface message may be defined. At least one piece of the following information should be included:
a UE identifier and other information;
a customized cell ID for a candidate cell;
PCI information for a candidate cell;
CGI information for a candidate cell;
frequency information for a candidate cell; or
a TA request identifier, which indicates the latest TA value per \UE per cell to be sent.

Step 6-3: a message for the candidate DU to report TA value associated information may reuse a current interface message, such as UE CONTEXT SETUP RESPONSE, UE CONTEXT MODIFICATION REQUIRED, or UE CONTEXT MODIFICATION RESPONSE; or a new interface message may be defined. The message should include at least one or more pieces of the following information:
a UE identifier and other information;
a customized cell ID for a candidate cell;
PCI information for a candidate cell;
CGI information for a candidate cell;
frequency information for a candidate cell;
a TA value for a candidate cell, which is explicitly included in the above interface message, and may also be implicitly included in an IE in the above message;
a TA value indication identifier, used to indicate a TA value for a candidate cell carried in the message;
a beam index for a detected uplink signal beam in a candidate cell;
a TCI index for a detected uplink signal beam in a candidate cell; or
a beam spatial relation in a candidate cell.

Example 2-3. FIG. 7 is a fourth schematic flowchart of an implementation of a method for TA transfer according to an embodiment of the present application. A serving DU requests to obtain a TA value corresponding to a candidate DU. The following steps are shown in FIG. 7.

Step 7-1: a CU receives a TA value sent from the candidate DU, and the TA value is temporarily stored in the CU. When a latest TA value is calculated, a new TA value replaces an old TA value.

Step 7-2: the CU receives a request message from the serving DU, which requests to send a latest TA value and other information. The request way may be expanding an original F1 interface message, such as UE CONTEXT MODIFICATION REQUEST; or a new interface message may be defined. At least one piece of the following information should be explicitly or implicitly included:
a UE identifier and other information;
a customized cell ID for a candidate cell;
PCI information for a candidate cell;
CGI information for a candidate cell;
frequency information for a candidate cell; or
a TA request identifier, which indicates the latest TA value per UE per cell to be sent.

Step 7-3: after receiving the request, the CU sends TA value associated information to the serving DU. The sending way may be expanding an original F1 interface message, such as UE CONTEXT MODIFICATION REQUEST; or a new interface message may be defined. At least one piece of the following information should be explicitly or implicitly included:
a UE identifier and other information;
a customized cell ID for a candidate cell;
PCI information for a candidate cell;
CGI information for a candidate cell;
frequency information for a candidate cell;
a TA value for a candidate cell, which is explicitly included in the above interface message, and may also be implicitly included in an IE in the above message;
a TA value indication identifier, used to indicate a TA value for a candidate cell carried in the message;
a beam index for a detected uplink signal beam in a candidate cell;
a TCI index for a detected uplink signal beam in a candidate cell; or
a beam spatial relation in a candidate cell.

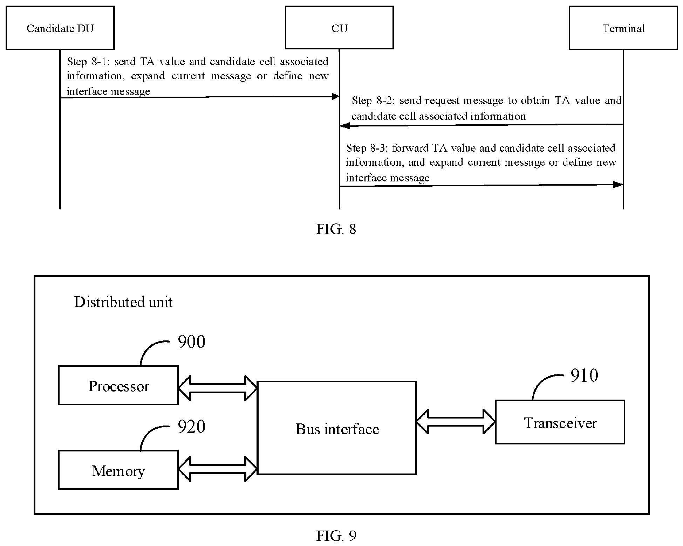

Example 2-4. FIG. 8 is a fifth schematic flowchart of an implementation of a method for TA transfer according to an embodiment of the present application. A target terminal sends a request message to obtain a TA value corresponding to a candidate DU. The following steps are shown in FIG. 7.

Step 8-1: a CU receives a TA value sent from the candidate DU, and the TA value is temporarily stored in the CU. When a latest TA value is calculated, a new TA value replaces an old TA value.

Step 8-2: the CU receives a request message from the target terminal, which requests to send the latest TA value and other information. The request way may be expanding an original interface message, such as INITIAL UL RRC MESSAGE TRANSFER, UL RRC MESSAGE TRANSFER; or a new interface message may be defined. At least one piece of the following information should be explicitly or implicitly included:
a UE identifier and other information;
a customized cell ID for a candidate cell;
PCI information for a candidate cell;
CGI information for a candidate cell;
frequency information for a candidate cell; or
a TA request identifier, which indicates the latest TA value per UE per cell to be sent.

Step 8-3: after receiving the request, the CU optionally sends TA value associated information to the target terminal. The sending way may be expanding an original interface message, such as DL RRC MESSAGE TRANSFER; or a new interface message may be defined. At least one piece of the following information should be explicitly or implicitly included:
a UE identifier and other information;
a customized cell ID for a candidate cell;
PCI information for a candidate cell;
CGI information for a candidate cell;
frequency information for a candidate cell;
a TA value for a candidate cell, which is explicitly included in the above interface message, and may also be implicitly included in an IE in the above message;
a TA value indication identifier, used to indicate a TA value for a candidate cell carried in the message;
a beam index for a detected uplink signal beam in a candidate cell;
a TCI index for a detected uplink signal beam in a candidate cell; or
a beam spatial relation in a candidate cell.

FIG. 9 is a first schematic structural diagram of a distributed unit (DU) according to an embodiment of the present application. As shown in FIG. 9, the DU includes a memory 920, a transceiver 910 and a processor 900, where the processor 900 and memory 920 may be physically arranged separately.

The memory 920 is used for storing a computer program, and the transceiver 910 is used for receiving and sending data under control of the processor 900.

In an embodiment, the transceiver 910 is used for receiving and sending data under control of the processor 900.

In FIG. 9, a bus architecture may include any number of interconnected buses and bridges, which are linked together through various circuits of one or more processors represented by the processor 900 and one or more memories represented by the memory 920. The bus architecture may also link together various other circuits, such as peripherals, voltage regulators, and power management circuits, etc., which are well known in the art, and therefore are not further described in the present application. The bus interface provides an interface. The transceiver 910 may include multiple elements, i.e., including a transmitter and a receiver, units for providing communication with various other devices over transmission media including wireless channels, wired channels, fiber optic cables, and the like.

The processor 900 is responsible for managing the bus architecture and general processing, and the memory 920 may store data used by the processor 900 when performing operations.

The processor 900 may be a central processing unit (CPU), an application specific integrated circuit (ASIC), a field-programmable gate array (FPGA), or a complex programmable logic device (CPLD), the processor may also use a multi-core architecture.

The processor 900 calls the computer program stored in the memory 920 to execute any of the methods performed by a candidate DU provided by the embodiments of the present application in accordance with the obtained executable instructions. The method includes:
sending a first message to a target centralized unit (CU), where
the first message contains a TA value of a first candidate cell for a target terminal, or contains a TA value of a specified candidate cell for a target terminal; and
the first candidate cell is a candidate cell corresponding to the candidate DU, and the specified candidate cell is one or more of first candidate cells.

In an embodiment, in case that the first message contains the TA value of the first candidate cell for the target terminal, the first message includes one or more of the following:
identification information of the target terminal;
identifier information of the first candidate cell;
frequency information of the first candidate cell;
indication information for an uplink signal beam corresponding to the first candidate cell;
indication information for the TA value, where the indication information is used to indicate whether the first message contains the TA value; or
a TA value corresponding to the first candidate cell.

In an embodiment, in case that the first message contains the TA value of the specified candidate cell for the target terminal, the first message includes one or more of the following:
identification information of the target terminal;
identifier information of the specified candidate cell;
frequency information of the specified candidate cell;
indication information for an uplink signal beam corresponding to the specified candidate cell;
indication information for the TA value, where the indication information is used to indicate whether the first message contains the TA value; or
a TA value corresponding to the specified candidate cell.

In an embodiment, before sending the first message to the target CU, the method includes:
receiving a reporting configuration message sent from the target CU, where the reporting configuration message is used to configure a reporting rule of the candidate DU reporting the TA value of the specified candidate cell for the target terminal;
   or,
receiving a first request message sent from the target CU, where the first request message is used to obtain a first TA value determined by the candidate DU from the candidate DU, and the first TA value is a TA value of the specified candidate cell for the target terminal.

In an embodiment, the reporting configuration message includes one or more of the following:
identification information of the target terminal;
identifier information of the specific candidate cell;
frequency information of the specified candidate cell;
a TA reporting period, where the TA reporting period is a positive integer multiple of a measurement period of an uplink reference signal;
a TA reporting number threshold, used to indicate that to report a TA value for a last time the DU performs measurement to obtain TA values after a number of times the candidate DU performs measurement to obtain TA values reaches the TA reporting number threshold; or
a TA reporting format, used to indicate a representation way of a TA value for a TA reporting.

In an embodiment, the first request message includes one or more of the following:
identification information of the target terminal;
identifier information of the specific candidate cell;
frequency information of the specified candidate cell; or
a TA request identifier, used to indicate that a TA value of a candidate cell for the target terminal is obtained in a unit of a single candidate cell.

In an embodiment, the identifier information of the first candidate cell is any one of a customized cell identifier, a new radio cell global identifier, a physical cell identifier, or a cell global identifier.

In an embodiment, the identifier information of the specified candidate cell is any one of a customized cell identifier, a new radio cell global identifier, a physical cell identifier, or a cell global identifier.

In an embodiment, the indication information for the uplink signal beam includes one or more of the following:
a beam index of the uplink signal beam;
a transmission configuration indicator index of the uplink signal beam; or
a spatial relation corresponding to the uplink signal beam.

In an embodiment, the TA reporting format includes any one of the following:
reporting a TA measurement value;
reporting a change amount in a TA measurement value, where the change amount in the TA measurement value is a difference between a TA measurement value at a current moment and a given reference value, or a difference between a TA measurement value at a current moment and a TA measurement value at a previous moment; or
reporting an index corresponding to a TA measurement value in a given TA value list, where the given TA value list stores different measurement value intervals of TA value and indexes corresponding to each of the measurement value intervals.

In an embodiment, the first message is an improved F1 interface message, or a customized F1 interface message, and the improved F1 interface message is obtained by expanding an original F1 interface message.

It should be noted here that the above DU provided by the embodiments of the present application may implement all the method steps performed by the candidate DU implemented by the above method embodiments, and may achieve the same effect. The same parts and beneficial effects as the same method embodiments are not repeated in the present application.

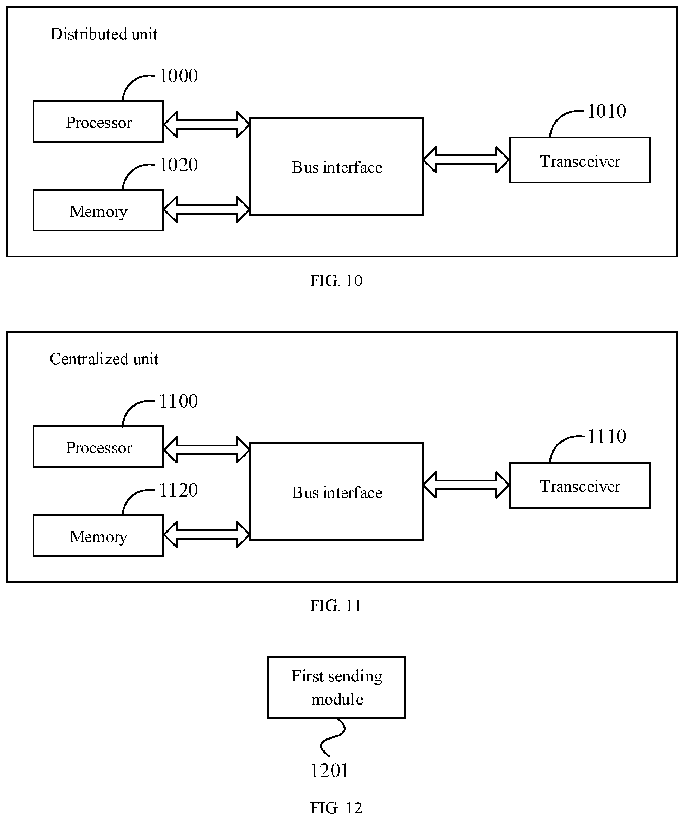

FIG. 10 is a second schematic structural diagram of a DU according to an embodiment of the present application. As shown in FIG. 10, the DU includes a memory 1020, a transceiver 1010 and a processor 1000, where the processor 1000 and memory 1020 may be physically arranged separately.

The memory 1020 is used for storing a computer program, and the transceiver 1010 is used for receiving and sending data under control of the processor 1000.

In an embodiment, the transceiver 1010 is used for receiving and sending data under control of the processor 1000.

In FIG. 10, a bus architecture may include any number of interconnected buses and bridges, which are linked together through various circuits of one or more processors represented by the processor 1000 and one or more memories represented by the memory 1020. The bus architecture may also link together various other circuits, such as peripherals, voltage regulators, and power management circuits, etc., which are well known in the art, and therefore are not further described in the present application. The bus interface provides an interface. The transceiver 1010 may include multiple elements, i.e., including a transmitter and a receiver, units for providing communication with various other devices over transmission media including wireless channels, wired channels, fiber optic cables, and the like.

The processor 1000 is responsible for managing the bus architecture and general processing, and the memory 1020 may store data used by the processor 1000 when performing operations.

The processor 1000 may be a central processing unit (CPU), an application specific integrated circuit (ASIC), a field-programmable gate array (FPGA), or a complex programmable logic device (CPLD), the processor may also use a multi-core architecture.

The processor 1000 calls the computer program stored in the memory 1020 to execute any of the methods performed by a serving DU provided by the embodiments of the present application in accordance with the obtained executable instructions. The method includes:
sending a second request message to a target centralized unit (CU) to obtain a first TA value determined by a candidate DU, where the first TA value is a TA value of a specified candidate cell for a target terminal,
where the specified candidate cell is one or more of first candidate cells, the first candidate cell is a candidate cell corresponding to the candidate DU, and the target CU stores first TA values determined by all candidate DUs.

In an embodiment, the second request message includes any one or more of the following:
identification information of the target terminal;
identifier information of the specific candidate cell;
frequency information of the specified candidate cell; or
a TA request identifier, used to indicate that a TA value of a candidate cell for the target terminal is obtained in a unit of a single candidate cell.

In an embodiment, the identifier information of the specified candidate cell is any one of a customized cell identifier, a new radio cell global identifier, a physical cell identifier, or a cell global identifier.

In an embodiment, the second request message is sent through an improved F1 interface message or a customized F1 interface message, and the improved F1 interface message is obtained by expanding an original F1 interface message.

It should be noted here that the above DU provided by the embodiments of the present application may implement all the method steps performed by the serving DU implemented by the above method embodiments, and may achieve the same effect. The same parts and beneficial effects as the same method embodiments are not repeated in the present application.

FIG. 11 is a schematic structural diagram of a centralized unit (CU) according to an embodiment of the present application. As shown in FIG. 11, the CU includes a memory 1120, a transceiver 1110 and a processor 1100, where the processor 1100 and memory 1120 may be physically arranged separately.

The memory 1120 is used for storing a computer program, and the transceiver 1110 is used for receiving and sending data under control of the processor 1100.

In an embodiment, the transceiver 1110 is used for receiving and sending data under control of the processor 1100.

In FIG. 11, a bus architecture may include any number of interconnected buses and bridges, which are linked together through various circuits of one or more processors represented by the processor 1100 and one or more memories represented by the memory 1120. The bus architecture may also link together various other circuits, such as peripherals, voltage regulators, and power management circuits, etc., which are well known in the art, and therefore are not further described in the present application. The bus interface provides an interface. The transceiver 1110 may include multiple elements, i.e., including a transmitter and a receiver, units for providing communication with various other devices over transmission media including wireless channels, wired channels, fiber optic cables, and the like.

The processor 1100 is responsible for managing the bus architecture and general processing, and the memory 1120 may store data used by the processor 900 when performing operations.

The processor 1100 may be a central processing unit (CPU), an application specific integrated circuit (ASIC), a field-programmable gate array (FPGA), or a complex programmable logic device (CPLD), the processor may also use a multi-core architecture.

The processor 1100 calls the computer program stored in the memory 1120 to execute any of the methods performed by a target CU provided by the embodiments of the present application in accordance with the obtained executable instructions. The method includes:
receiving a first message sent from a candidate distributed unit (DU);
determining, based on the first message, a TA value of a first candidate cell for a target terminal, or a TA value of a specified candidate cell for a target terminal; where
the first message contains the TA value of the first candidate cell for the target terminal, or contains the TA value of the specified candidate cell for the target terminal; and
the first candidate cell is a candidate cell corresponding to the candidate DU, and the specified candidate cell is one or more of first candidate cells.

In an embodiment, in case that the first message contains the TA value of the specified candidate cell for the target terminal, before receiving the first message sent from the candidate DU, the method includes:
sending a reporting configuration message to the candidate DU, where the reporting configuration message is used to configure a reporting rule of the candidate DU reporting the TA value of the specified candidate cell for the target terminal; or
sending a first request message to the candidate DU, where the first request message is used to obtain a TA value of the specified candidate cell for the target terminal determined by the candidate DU.

In an embodiment, the reporting configuration message includes one or more of the following:
identification information of the target terminal;
identifier information of the specific candidate cell;
frequency information of the specified candidate cell;
a TA reporting period, where the TA reporting period is a positive integer multiple of a measurement period of an uplink reference signal;
a TA reporting number threshold, used to indicate that to report a TA value for a last time the DU performs measurement to obtain TA values after a number of times the candidate DU performs measurement to obtain TA values reaches the TA reporting number threshold; or
a TA reporting format, used to indicate a representation way of a TA value for a TA reporting.

In an embodiment, the first request message includes any one or more of the following:
identification information of the target terminal;
identifier information of the specific candidate cell;
frequency information of the specified candidate cell; or
a TA request identifier, used to indicate that a TA value of a candidate cell for the target terminal is obtained in a unit of a single candidate cell.

In an embodiment, the specified candidate cell is determined based on the identifier information of the specified candidate cell, and the identifier information of the specified candidate cell is any one of a customized cell identifier, a new radio cell global identifier, a physical cell identifier, or a cell global identifier.

In an embodiment, the first candidate cell is determined based on the identifier information of the first candidate cell, and the identifier information of the first candidate cell is any one of a customized cell identifier, a new radio cell global identifier, a physical cell identifier, or a cell global identifier.

In an embodiment, the TA reporting format includes any one of the following:
reporting a TA measurement value;
reporting a change amount in a TA measurement value, where the change amount in the TA measurement value is a difference between a TA measurement value at a current moment and a given reference value, or a difference between a TA measurement value at a current moment and a TA measurement value at a previous moment; or
reporting an index corresponding to a TA measurement value in a given TA value list, where the given TA value list stores different measurement value intervals of TA value and indexes corresponding to each of the measurement value intervals.

In an embodiment, the first message is an improved F1 interface message, or a customized F1 interface message, and the improved F1 interface message is obtained by expanding an original F1 interface message.

It should be noted here that the above CU provided by the embodiments of the present application may implement all the method steps performed by the target CU implemented by the above method embodiments, and may achieve the same effect. The same parts and beneficial effects as the same method embodiments are not repeated in the present application.

FIG. 12 is a first schematic structural diagram of an apparatus for TA transfer according to an embodiment of the present application. As shown in FIG. 12, the apparatus includes:
a first sending module 1201, used for sending a first message to a target centralized unit (CU), where
the first message contains a TA value of a first candidate cell for a target terminal, or contains a TA value of a specified candidate cell for a target terminal; and
the first candidate cell is a candidate cell corresponding to the candidate DU, and the specified candidate cell is one or more of first candidate cells.

**In** an embodiment, in case that the first message contains the TA value of the first candidate cell for the target terminal, the first message includes one or more of the following:
identification information of the target terminal;
identifier information of the first candidate cell;
frequency information of the first candidate cell;
indication information for an uplink signal beam corresponding to the first candidate cell;
indication information for the TA value, where the indication information is used to indicate whether the first message contains the TA value; or
a TA value corresponding to the first candidate cell.

**In** an embodiment, in case that the first message contains the TA value of the specified candidate cell for the target terminal, the first message includes one or more of the following:
identification information of the target terminal;
identifier information of the specified candidate cell;
frequency information of the specified candidate cell;
indication information for an uplink signal beam corresponding to the specified candidate cell;
indication information for the TA value, where the indication information is used to indicate whether the first message contains the TA value; or
a TA value corresponding to the specified candidate cell.

**In** an embodiment, the apparatus further includes a first receiving module 1202, used for:
receiving a reporting configuration message sent from the target CU, where the reporting configuration message is used to configure a reporting rule of the candidate DU reporting the TA value of the specified candidate cell for the target terminal;
   or,
receiving a first request message sent from the target CU, where the first request message is used to obtain a first TA value determined by the candidate DU from the candidate DU, and the first TA value is a TA value of the specified candidate cell for the target terminal.

In an embodiment, the reporting configuration message includes one or more of the following:
identification information of the target terminal;
identifier information of the specific candidate cell;
frequency information of the specified candidate cell;
a TA reporting period, where the TA reporting period is a positive integer multiple of a measurement period of an uplink reference signal;
a TA reporting number threshold, used to indicate that to report a TA value for a last time the DU performs measurement to obtain TA values after a number of times the candidate DU performs measurement to obtain TA values reaches the TA reporting number threshold; or
a TA reporting format, used to indicate a representation way of a TA value for a TA reporting.

In an embodiment, the first request message includes one or more of the following:
identification information of the target terminal;
identifier information of the specific candidate cell;
frequency information of the specified candidate cell; or
a TA request identifier, used to indicate that a TA value of a candidate cell for the target terminal is obtained in a unit of a single candidate cell.

In an embodiment, the identifier information of the first candidate cell is any one of a customized cell identifier, a new radio cell global identifier, a physical cell identifier, or a cell global identifier.

In an embodiment, the identifier information of the specified candidate cell is any one of a customized cell identifier, a new radio cell global identifier, a physical cell identifier, or a cell global identifier.

In an embodiment, the indication information for the uplink signal beam includes one or more of the following:
a beam index of the uplink signal beam;
a transmission configuration indicator index of the uplink signal beam; or
a spatial relation corresponding to the uplink signal beam.

In an embodiment, the TA reporting format includes any one of the following:
reporting a TA measurement value;
reporting a change amount in a TA measurement value, where the change amount in the TA measurement value is a difference between a TA measurement value at a current moment and a given reference value, or a difference between a TA measurement value at a current moment and a TA measurement value at a previous moment; or
reporting an index corresponding to a TA measurement value in a given TA value list, where the given TA value list stores different measurement value intervals of TA value and indexes corresponding to each of the measurement value intervals.

In an embodiment, the first message is an improved F1 interface message, or a customized F1 interface message, and the improved F1 interface message is obtained by expanding an original F1 interface message.

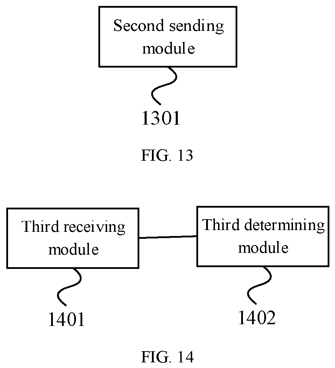

FIG. 13 is a second schematic structural diagram of an apparatus for TA transfer according to an embodiment of the present application. As shown in FIG. 13, the apparatus includes:
a second sending module 1301, used for sending a second request message to a target centralized unit (CU) to obtain a first TA value determined by a candidate DU, where the first TA value is a TA value of a specified candidate cell for a target terminal,
where the specified candidate cell is one or more of first candidate cells, the first candidate cell is a candidate cell corresponding to the candidate DU, and the target CU stores first TA values determined by all candidate DUs.

In an embodiment, the second request message includes any one or more of the following:
identification information of the target terminal;
identifier information of the specific candidate cell;
frequency information of the specified candidate cell; or
a TA request identifier, used to indicate that a TA value of a candidate cell for the target terminal is obtained in a unit of a single candidate cell.

In an embodiment, the identifier information of the specified candidate cell is any one of a customized cell identifier, a new radio cell global identifier, a physical cell identifier, or a cell global identifier.

In an embodiment, the second request message is sent through an improved F1 interface message or a customized F1 interface message, and the improved F1 interface message is obtained by expanding an original F1 interface message.

FIG. 14 is a third schematic structural diagram of an apparatus for TA transfer according to an embodiment of the present application. As shown in FIG. 14, the apparatus includes:
a third receiving module 1401, used for receiving a first message sent from a candidate distributed unit (DU); and
a third determining module 1402, used for determining, based on the first message, a TA value of a first candidate cell for a target terminal, or a TA value of a specified candidate cell for a target terminal; where
the first message contains the TA value of the first candidate cell for the target terminal, or contains the TA value of the specified candidate cell for the target terminal; and
the first candidate cell is a candidate cell corresponding to the candidate DU, and the specified candidate cell is one or more of first candidate cells.

In an embodiment, the apparatus further includes a third sending module 1403, used for:
sending a reporting configuration message to the candidate DU, where the reporting configuration message is used to configure a reporting rule of the candidate DU reporting the TA value of the specified candidate cell for the target terminal; or
sending a first request message to the candidate DU, where the first request message is used to obtain a TA value of the specified candidate cell for the target terminal determined by the candidate DU.

In an embodiment, the reporting configuration message includes one or more of the following:
identification information of the target terminal;
identifier information of the specific candidate cell;
frequency information of the specified candidate cell;
a TA reporting period, where the TA reporting period is a positive integer multiple of a measurement period of an uplink reference signal;
a TA reporting number threshold, used to indicate that to report a TA value for a last time the DU performs measurement to obtain TA values after a number of times the candidate DU performs measurement to obtain TA values reaches the TA reporting number threshold; or
a TA reporting format, used to indicate a representation way of a TA value for a TA reporting.

In an embodiment, the first request message includes any one or more of the following:
identification information of the target terminal;
identifier information of the specific candidate cell;
frequency information of the specified candidate cell; or
a TA request identifier, used to indicate that a TA value of a candidate cell for the target terminal is obtained in a unit of a single candidate cell.

In an embodiment, the specified candidate cell is determined based on the identifier information of the specified candidate cell, and the identifier information of the specified candidate cell is any one of a customized cell identifier, a new radio cell global identifier, a physical cell identifier, or a cell global identifier.

In an embodiment, the first candidate cell is determined based on the identifier information of the first candidate cell, and the identifier information of the first candidate cell is any one of a customized cell identifier, a new radio cell global identifier, a physical cell identifier, or a cell global identifier.

In an embodiment, the TA reporting format includes any one of the following:
reporting a TA measurement value;
reporting a change amount in a TA measurement value, where the change amount in the TA measurement value is a difference between a TA measurement value at a current moment and a given reference value, or a difference between a TA measurement value at a current moment and a TA measurement value at a previous moment; or
reporting an index corresponding to a TA measurement value in a given TA value list, where the given TA value list stores different measurement value intervals of TA value and indexes corresponding to each of the measurement value intervals.

In an embodiment, the first message is an improved F1 interface message, or a customized F1 interface message, and the improved F1 interface message is obtained by expanding an original F1 interface message.

It should be noted that, the division of units in the embodiments of the present application is schematic, and is only a logical function division, and there may be other division manners in actual implementation. In addition, the functional units in the various embodiments of the present application may be integrated into one processing unit, or each unit may exist alone physically, or two or more units may be integrated into one unit. The above-mentioned integrated unit may be implemented in the form of hardware or software functional unit.

If the integrated unit is implemented in the form of a software functional unit and sold or used as an independent product, it may be stored in a processor readable storage medium. Based on such understanding, the solutions of the present application in essence or a part of the solutions that contributes to the prior art, or all or part of the solutions, may be embodied in the form of a software product, which is stored in a storage medium, including several instructions to cause a computer device (which may be a personal computer, server, or network device, etc.) or a processor to perform all or part of the steps of the methods described in the respective embodiments of the present application. The storage medium described above includes various media that may store program codes such as a U disk, a mobile hard disk, a read-only memory (ROM), a random access memory (RAM), a magnetic disk, or a compact disk.

It should be noted here that the above apparatuses according to the embodiments of the present application may implement all the method steps implemented by the above method embodiments, and may achieve the same effect. The same parts and beneficial effects as the same method embodiments are not repeated here.

An embodiment of the present application further provides a computer readable storage medium storing a computer program, where the computer program is used to cause a computer to perform the methods for TA transfer described above.

It should be noted here that the computer readable storage medium according to the embodiments of the present application may implement all the method steps implemented by the above method embodiments, and may achieve the same effect. The same parts and beneficial effects as the same method embodiments are not repeated here.

The computer readable storage medium may be any available medium or data storage device that may be accessed by the computer, including but not limited to, a magnetic storage (e.g., a floppy disk, a hard disk, a magnetic tape, a magneto-optical disk (MO), etc.), an optical memory (such as CD, DVD, BD, HVD, etc.), and a semiconductor memory (such as ROM, EPROM, EEPROM, a non-volatile memory (NAND FLASH), a solid-state drive (SSD)), etc.

The solutions according to the embodiments of the present application may be applicable to various systems, for example, 5G systems. For example, the applicable systems may be a global system of mobile communication (GSM) system, a code division multiple access (CDMA) system, a wideband code division multiple access (WCDMA) general packet radio service (GPRS) system, a long term evolution (LTE) system, an LTE frequency division duplex (FDD) system, an LTE time division duplex (TDD) system, a long term evolution advanced (LTE-A) system, a universal mobile telecommunication system (UMTS), a worldwide interoperability for microwave access (WiMAX) system, a 5G new radio (NR) system, etc. These various systems include a terminal device and a network device, and may further include a core network part, such as an evolved packet system (EPS), a 5G system (5GS), and the like.

The terminal in the embodiments of the present application may be a device that provides voice and/or data connectivity to a user, a handheld device with a wireless connection function, or other processing devices connected to a wireless modem. In different systems, the names of the terminal may be different. For example, in the 5G system, the terminal may be called as a user equipment (UE). A wireless terminal device may communicate with one or more core networks (CNs) via a radio access network (RAN), and the wireless terminal device may be a mobile terminal device, such as a mobile phone (or cellular phone), a computer with mobile terminal device, e.g., a portable mobile device, a pocket-sized mobile device, a handheld mobile device, a computer-built mobile device or a vehicle-mounted mobile device, which exchange language and/or data with the radio access network. For example, a personal communication service (PCS) phone, a radio phone, a session initiated protocol (SIP) phone, a wireless local loop (WLL) station, a personal digital assistant (PDA) and other devices. A wireless terminal device may also be called a system, a subscriber unit, a subscriber station, a mobile station, a mobile, a remote station, an access point, a remote terminal, an access terminal, a user terminal, a user agent, or a user device, which is not limited in the embodiments of the present application.

The network device in the embodiments of the present application may be a base station, and the base station may include multiple cells providing services for the terminal device. Depending on the specific scenario, the base station may be called an access point, or a device communicating with a wireless terminal device through one or more sectors on the air interface in the access network, or other names. The network device may be used for exchanging received air frames with internet protocol (IP) packets, and acting as a router between the wireless terminal device and the rest of the access network, where the rest of the access network may include an IP communication network. The network device may also coordinate attribute management for the air interface. For example, the network device in the embodiments of the present application may be a base transceiver station (BTS) in a global system for mobile communications (GSM) or a code division multiple access (CDMA), a node B in a wide-band code division multiple access (WCDMA), an evolutional node B (eNB or e-Node B) in a long term evolution (LTE) system, a 5G base station (gNB) in 5G network architecture (next generation system), a home evolved node B (HeNB), a relay node, a femto, or a pico base station (pico), etc., which is not limited in the embodiments of the present application. In some network structures, the network device may include a centralized unit (CU) node and a distributed unit (DU) node, and the centralized unit and the distributed unit may be geographically separated.

A multi-input multi-output (MIMO) transmission may be performed between the network device and the terminal device by using one or more antennas. The MIMO transmission may be single-user MIMO (SU-MIMO) or multi-user MIMO (MU-MIMO). Depending on the form and number of antenna combinations, MIMO transmission may be 2D-MIMO, 3D-MIMO, FD-MIMO or massive-MIMO, and may also be diversity transmission, precoding transmission, beamforming transmission, etc.

As will be appreciated by those skilled in the art, embodiments of the present application may be provided as a method, system, or computer program product. Accordingly, the present application may take the form of an entirely hardware embodiment, an entirely software embodiment, or an embodiment combining software and hardware aspects. Furthermore, the present application may take the form of a computer program product embodied on one or more computer-usable storage media having computer-usable program code embodied therein, including but not limited to disk storage, optical storage, and the like.

The present application is described with reference to flow charts and/or block diagrams of methods, apparatus (systems), and computer program products according to embodiments of the present application. It will be understood that each flow and/or block in the flow charts and/or block diagrams, and combinations thereof may be implemented by computer-executable instructions. These computer-executable instructions may be provided to processors of a general purpose computer, a special purpose computer, an embedded processor or other programmable data processing device to produce a machine and the instructions executed by the processor of the computer or other programmable data processing device form a means for performing the functions specified in one or more flows in a flowchart and/or one or more blocks of a block diagram.

These processor-executable instructions may also be stored in a processor-readable memory capable of directing a computer or other programmable data processing apparatus to operate in a particular manner, and the instructions stored in the processor-readable memory may result in a manufacture including instruction means, the instruction means may perform the functions specified in one or more flows of the flowchart and/or one or more blocks of the block diagram.

These processor-executable instructions may also be loaded onto a computer or other programmable data processing device to cause a series of operational steps to be performed on the computer or other programmable device to produce a computer-implemented process and instructions performed on the computer or other programmable devices provide steps for performing the functions specified in one or more flows of the flowchart and/or one or more blocks of the block diagram.

It will be apparent to those skilled in the art that various modifications and variations may be made in the present application without departing from the scope of the present application. Thus, provided that these modifications and variations of the present application fall within the scope of the claims of the present application and their equivalents, the present application is also intended to cover such modifications and variations.

## Claims

1. A method for timing advance (TA) transfer, performed by a candidate distributed unit (DU), comprising:
sending a first message to a target centralized unit (CU),
wherein the first message contains a TA value of a first candidate cell for a target terminal, or contains a TA value of a specified candidate cell for a target terminal; and
the first candidate cell is a candidate cell corresponding to the candidate DU, and the specified candidate cell is one or more of first candidate cells.

2. The method of claim 1, wherein in case that the first message contains the TA value of the first candidate cell for the target terminal, the first message comprises one or more of the following:
identification information of the target terminal;
identifier information of the first candidate cell;
frequency information of the first candidate cell;
indication information for an uplink signal beam corresponding to the first candidate cell;
indication information for the TA value, wherein the indication information is used to indicate whether the first message contains the TA value; or
a TA value corresponding to the first candidate cell.

3. The method of claim 1, wherein in case that the first message contains the TA value of the specified candidate cell for the target terminal, the first message comprises one or more of the following:
identification information of the target terminal;
identifier information of the specified candidate cell;
frequency information of the specified candidate cell;
indication information for an uplink signal beam corresponding to the specified candidate cell;
indication information for the TA value, wherein the indication information is used to indicate whether the first message contains the TA value; or
a TA value corresponding to the specified candidate cell.

4. The method of claim 3, wherein before sending the first message to the target CU, the method comprises:
receiving a reporting configuration message sent from the target CU, wherein the reporting configuration message is used to configure a reporting rule of the candidate DU reporting the TA value of the specified candidate cell for the target terminal;
or,
receiving a first request message sent from the target CU, wherein the first request message is used to obtain a first TA value determined by the candidate DU from the candidate DU, and the first TA value is a TA value of the specified candidate cell for the target terminal.

5. The method of claim 4, wherein the reporting configuration message comprises one or more of the following:
identification information of the target terminal;
identifier information of the specific candidate cell;
frequency information of the specified candidate cell;
a TA reporting period, wherein the TA reporting period is a positive integer multiple of a measurement period of an uplink reference signal;
a TA reporting number threshold, used to indicate that to report a TA value for a last time the DU performs measurement to obtain TA values after a number of times the candidate DU performs measurement to obtain TA values reaches the TA reporting number threshold; or
a TA reporting format, used to indicate a representation way of a TA value for a TA reporting.

6. The method of claim 4, wherein the first request message comprises one or more of the following:
identification information of the target terminal;
identifier information of the specific candidate cell;
frequency information of the specified candidate cell; or
a TA request identifier, used to indicate that a TA value of a candidate cell for the target terminal is obtained in a unit of a single candidate cell.

7. The method of claim 2, wherein the identifier information of the first candidate cell is any one of a customized cell identifier, a new radio cell global identifier, a physical cell identifier, or a cell global identifier.

8. The method of any one of claims 3 to 6, wherein the identifier information of the specified candidate cell is any one of a customized cell identifier, a new radio cell global identifier, a physical cell identifier, or a cell global identifier.

9. The method of claim 2 or 3, wherein the indication information for the uplink signal beam comprises one or more of the following:
a beam index of the uplink signal beam;
a transmission configuration indicator index of the uplink signal beam; or
a spatial relation corresponding to the uplink signal beam.

10. The method of claim 5, wherein the TA reporting format comprises any one of the following:
reporting a TA measurement value;
reporting a change amount in a TA measurement value, wherein the change amount in the TA measurement value is a difference between a TA measurement value at a current moment and a given reference value, or a difference between a TA measurement value at a current moment and a TA measurement value at a previous moment; or
reporting an index corresponding to a TA measurement value in a given TA value list, wherein the given TA value list stores different measurement value intervals of TA value and indexes corresponding to each of the measurement value intervals.

11. The method of any one of claims 1 to 4, wherein the first message is an improved F1 interface message, or a customized F1 interface message, and the improved F1 interface message is obtained by expanding an original F1 interface message.

12. A method for timing advance (TA) transfer, performed by a serving distributed unit (DU), comprising:
sending a second request message to a target centralized unit (CU) to obtain a first TA value determined by a candidate DU, wherein the first TA value is a TA value of a specified candidate cell for a target terminal,
wherein the specified candidate cell is one or more of first candidate cells, the first candidate cell is a candidate cell corresponding to the candidate DU, and the target CU stores first TA values determined by all candidate DUs.

13. The method of claim 12, wherein the second request message comprises any one or more of the following:
identification information of the target terminal;
identifier information of the specific candidate cell;
frequency information of the specified candidate cell; or
a TA request identifier, used to indicate that a TA value of a candidate cell for the target terminal is obtained in a unit of a single candidate cell.

14. The method of claim 13, wherein the identifier information of the specified candidate cell is any one of a customized cell identifier, a new radio cell global identifier, a physical cell identifier, or a cell global identifier.

15. The method of any one of claims 12 to 14, wherein the second request message is sent through an improved F1 interface message or a customized F1 interface message, and the improved F1 interface message is obtained by expanding an original F1 interface message.

16. A method for timing advance (TA) transfer, performed by a target centralized unit (CU), comprising:
receiving a first message sent from a candidate distributed unit (DU);
determining, based on the first message, a TA value of a first candidate cell for a target terminal, or a TA value of a specified candidate cell for a target terminal; wherein
the first message contains the TA value of the first candidate cell for the target terminal, or contains the TA value of the specified candidate cell for the target terminal; and
the first candidate cell is a candidate cell corresponding to the candidate DU, and the specified candidate cell is one or more of first candidate cells.

17. The method of claim 16, wherein in case that the first message contains the TA value of the specified candidate cell for the target terminal, before receiving the first message sent from the candidate DU, comprising:
sending a reporting configuration message to the candidate DU, wherein the reporting configuration message is used to configure a reporting rule of the candidate DU reporting the TA value of the specified candidate cell for the target terminal; or
sending a first request message to the candidate DU, wherein the first request message is used to obtain a TA value of the specified candidate cell for the target terminal determined by the candidate DU.

18. The method of claim 17, wherein the reporting configuration message comprises one or more of the following:
identification information of the target terminal;
identifier information of the specific candidate cell;
frequency information of the specified candidate cell;
a TA reporting period, wherein the TA reporting period is a positive integer multiple of a measurement period of an uplink reference signal;
a TA reporting number threshold, used to indicate that to report a TA value for a last time the DU performs measurement to obtain TA values after a number of times the candidate DU performs measurement to obtain TA values reaches the TA reporting number threshold; or
a TA reporting format, used to indicate a representation way of a TA value for a TA reporting.

19. The method of claim 17, wherein the first request message comprises any one or more of the following:
identification information of the target terminal;
identifier information of the specific candidate cell;
frequency information of the specified candidate cell; or
a TA request identifier, used to indicate that a TA value of a candidate cell for the target terminal is obtained in a unit of a single candidate cell.

20. The method of any one of claims 16 to 19, wherein the specified candidate cell is determined based on the identifier information of the specified candidate cell, and the identifier information of the specified candidate cell is any one of a customized cell identifier, a new radio cell global identifier, a physical cell identifier, or a cell global identifier.

21. The method of any one of claims 16 to 19, wherein the first candidate cell is determined based on the identifier information of the first candidate cell, and the identifier information of the first candidate cell is any one of a customized cell identifier, a new radio cell global identifier, a physical cell identifier, or a cell global identifier.

22. The method of claim 18, wherein the TA reporting format comprises any one of the following:
reporting a TA measurement value;
reporting a change amount in a TA measurement value, wherein the change amount in the TA measurement value is a difference between a TA measurement value at a current moment and a given reference value, or a difference between a TA measurement value at a current moment and a TA measurement value at a previous moment; or
reporting an index corresponding to a TA measurement value in a given TA value list, wherein the given TA value list stores different measurement value intervals of TA value and indexes corresponding to each of the measurement value intervals.

23. The method of any one of claims 16 to 19, wherein the first message is an improved F1 interface message, or a customized F1 interface message, and the improved F1 interface message is obtained by expanding an original F1 interface message.

24. A distributed unit (DU), comprising a memory, a transceiver and a processor,
wherein the memory is used for storing a computer program, the transceiver is used for sending and receiving data under control of the processor, and the processor is used for reading the computer program in the memory and performing the following operations:
sending a first message to a target centralized unit (CU), wherein
the first message contains a timing advance (TA) value of a first candidate cell for a target terminal, or contains a TA value of a specified candidate cell for a target terminal; and
the first candidate cell is a candidate cell corresponding to the candidate DU, and the specified candidate cell is one or more of first candidate cells.

25. The DU of claim 24, wherein in case that the first message contains the TA value of the first candidate cell for the target terminal, the first message comprises one or more of the following:
identification information of the target terminal;
identifier information of the first candidate cell;
frequency information of the first candidate cell;
indication information for an uplink signal beam corresponding to the first candidate cell;
indication information for the TA value, wherein the indication information is used to indicate whether the first message contains the TA value; or
a TA value corresponding to the first candidate cell.

26. The DU of claim 24, wherein in case that the first message contains the TA value of the specified candidate cell for the target terminal, the first message comprises one or more of the following:
identification information of the target terminal;
identifier information of the specified candidate cell;
frequency information of the specified candidate cell;
indication information for an uplink signal beam corresponding to the specified candidate cell;
indication information for the TA value, wherein the indication information is used to indicate whether the first message contains the TA value; or
a TA value corresponding to the specified candidate cell.

27. The DU of claim 26, wherein before sending the first message to the target CU, the method comprises:
receiving a reporting configuration message sent from the target CU, wherein the reporting configuration message is used to configure a reporting rule of the candidate DU reporting the TA value of the specified candidate cell for the target terminal;
or,
receiving a first request message sent from the target CU, wherein the first request message is used to obtain a first TA value determined by the candidate DU from the candidate DU, and the first TA value is a TA value of the specified candidate cell for the target terminal.

28. The DU of claim 27, wherein the reporting configuration message comprises one or more of the following:
identification information of the target terminal;
identifier information of the specific candidate cell;
frequency information of the specified candidate cell;
a TA reporting period, wherein the TA reporting period is a positive integer multiple of a measurement period of an uplink reference signal;
a TA reporting number threshold, used to indicate that to report a TA value for a last time the DU performs measurement to obtain TA values after a number of times the candidate DU performs measurement to obtain TA values reaches the TA reporting number threshold; or
a TA reporting format, used to indicate a representation way of a TA value for a TA reporting.

29. The DU of claim 27, wherein the first request message comprises one or more of the following:
identification information of the target terminal;
identifier information of the specific candidate cell;
frequency information of the specified candidate cell; or
a TA request identifier, used to indicate that a TA value of a candidate cell for the target terminal is obtained in a unit of a single candidate cell.

30. The DU of claim 25, wherein the identifier information of the first candidate cell is any one of a customized cell identifier, a new radio cell global identifier, a physical cell identifier, or a cell global identifier.

31. The DU of any one of claims 26 to 29, wherein the identifier information of the specified candidate cell is any one of a customized cell identifier, a new radio cell global identifier, a physical cell identifier, or a cell global identifier.

32. The DU of claim 25 or 26, wherein the indication information for the uplink signal beam comprises one or more of the following:
a beam index of the uplink signal beam;
a transmission configuration indicator index of the uplink signal beam; or
a spatial relation corresponding to the uplink signal beam.

33. The DU of claim 28, wherein the TA reporting format comprises any one of the following:
reporting a TA measurement value;
reporting a change amount in a TA measurement value, wherein the change amount in the TA measurement value is a difference between a TA measurement value at a current moment and a given reference value, or a difference between a TA measurement value at a current moment and a TA measurement value at a previous moment; or
reporting an index corresponding to a TA measurement value in a given TA value list, wherein the given TA value list stores different measurement value intervals of TA value and indexes corresponding to each of the measurement value intervals.

34. The DU of any one of claims 24 to 27, wherein the first message is an improved F1 interface message, or a customized F1 interface message, and the improved F1 interface message is obtained by expanding an original F1 interface message.

35. A distributed unit (DU), comprising a memory, a transceiver and a processor,
wherein the memory is used for storing a computer program, the transceiver is used for sending and receiving data under control of the processor, and the processor is used for reading the computer program in the memory and performing the following operations:
sending a second request message to a target centralized unit (CU) to obtain a first timing advance (TA) value determined by a candidate DU, wherein the first TA value is a TA value of a specified candidate cell for a target terminal,
wherein the specified candidate cell is one or more of first candidate cells, the first candidate cell is a candidate cell corresponding to the candidate DU, and the target CU stores first TA values determined by all candidate DUs.

36. The DU of claim 35, wherein the second request message comprises any one or more of the following:
identification information of the target terminal;
identifier information of the specific candidate cell;
frequency information of the specified candidate cell; or
a TA request identifier, used to indicate that a TA value of a candidate cell for the target terminal is obtained in a unit of a single candidate cell.

37. The DU of claim 36, wherein the identifier information of the specified candidate cell is any one of a customized cell identifier, a new radio cell global identifier, a physical cell identifier, or a cell global identifier.

38. The DU of any one of claims 35 to 37, wherein the second request message is sent through an improved F1 interface message or a customized F1 interface message, and the improved F1 interface message is obtained by expanding an original F1 interface message.

39. A centralized unit (CU), comprising a memory, a transceiver and a processor,
wherein the memory is used for storing a computer program, the transceiver is used for sending and receiving data under control of the processor, and the processor is used for reading the computer program in the memory and performing the following operations:
receiving a first message sent from a candidate distributed unit (DU);
determining, based on the first message, a timing advance (TA) value of a first candidate cell for a target terminal, or a TA value of a specified candidate cell for a target terminal; wherein
the first message contains the TA value of the first candidate cell for the target terminal, or contains the TA value of the specified candidate cell for the target terminal; and
the first candidate cell is a candidate cell corresponding to the candidate DU, and the specified candidate cell is one or more of first candidate cells.

40. The CU of claim 39, wherein in case that the first message contains the TA value of the specified candidate cell for the target terminal, before receiving the first message sent from the candidate DU, the operations comprises:
sending a reporting configuration message to the candidate DU, wherein the reporting configuration message is used to configure a reporting rule of the candidate DU reporting the TA value of the specified candidate cell for the target terminal; or
sending a first request message to the candidate DU, wherein the first request message is used to obtain a TA value of the specified candidate cell for the target terminal determined by the candidate DU.

41. The CU of claim 40, wherein the reporting configuration message comprises one or more of the following:
identification information of the target terminal;
identifier information of the specific candidate cell;
frequency information of the specified candidate cell;
a TA reporting period, wherein the TA reporting period is a positive integer multiple of a measurement period of an uplink reference signal;
a TA reporting number threshold, used to indicate that to report a TA value for a last time the DU performs measurement to obtain TA values after a number of times the candidate DU performs measurement to obtain TA values reaches the TA reporting number threshold; or
a TA reporting format, used to indicate a representation way of a TA value for a TA reporting.

42. The CU of claim 40, wherein the first request message comprises any one or more of the following:
identification information of the target terminal;
identifier information of the specific candidate cell;
frequency information of the specified candidate cell; or
a TA request identifier, used to indicate that a TA value of a candidate cell for the target terminal is obtained in a unit of a single candidate cell.

43. The CU of any one of claims 39 to 42, wherein the specified candidate cell is determined based on the identifier information of the specified candidate cell, and the identifier information of the specified candidate cell is any one of a customized cell identifier, a new radio cell global identifier, a physical cell identifier, or a cell global identifier.

44. The CU of any one of claims 39 to 42, wherein the first candidate cell is determined based on the identifier information of the first candidate cell, and the identifier information of the first candidate cell is any one of a customized cell identifier, a new radio cell global identifier, a physical cell identifier, or a cell global identifier.

45. The CU of claim 41, wherein the TA reporting format comprises any one of the following:
reporting a TA measurement value;
reporting a change amount in a TA measurement value, wherein the change amount in the TA measurement value is a difference between a TA measurement value at a current moment and a given reference value, or a difference between a TA measurement value at a current moment and a TA measurement value at a previous moment; or
reporting an index corresponding to a TA measurement value in a given TA value list, wherein the given TA value list stores different measurement value intervals of TA value and indexes corresponding to each of the measurement value intervals.

46. The CU of any one of claims 39 to 42, wherein the first message is an improved F1 interface message, or a customized F1 interface message, and the improved F1 interface message is obtained by expanding an original F1 interface message.

47. An apparatus for timing advance (TA) transfer, for use in a candidate distributed unit (DU), comprising:
a first sending module, used for sending a first message to a target centralized unit (CU), wherein
the first message contains a TA value of a first candidate cell for a target terminal, or contains a TA value of a specified candidate cell for a target terminal; and
the first candidate cell is a candidate cell corresponding to the candidate DU, and the specified candidate cell is one or more of first candidate cells.

48. The apparatus of claim 47, wherein in case that the first message contains the TA value of the first candidate cell for the target terminal, the first message comprises one or more of the following:
identification information of the target terminal;
identifier information of the first candidate cell;
frequency information of the first candidate cell;
indication information for an uplink signal beam corresponding to the first candidate cell;
indication information for the TA value, wherein the indication information is used to indicate whether the first message contains the TA value; or
a TA value corresponding to the first candidate cell.

49. The apparatus of claim 47, wherein in case that the first message contains the TA value of the specified candidate cell for the target terminal, the first message comprises one or more of the following:
identification information of the target terminal;
identifier information of the specified candidate cell;
frequency information of the specified candidate cell;
indication information for an uplink signal beam corresponding to the specified candidate cell;
indication information for the TA value, wherein the indication information is used to indicate whether the first message contains the TA value; or
a TA value corresponding to the specified candidate cell.

50. The apparatus of claim 49, wherein the apparatus further comprises a first receiving module, used for:
receiving a reporting configuration message sent from the target CU, wherein the reporting configuration message is used to configure a reporting rule of the candidate DU reporting the TA value of the specified candidate cell for the target terminal;
or,
receiving a first request message sent from the target CU, wherein the first request message is used to obtain a first TA value determined by the candidate DU from the candidate DU, and the first TA value is a TA value of the specified candidate cell for the target terminal.

51. The apparatus of claim 50, wherein the reporting configuration message comprises one or more of the following:
identification information of the target terminal;
identifier information of the specific candidate cell;
frequency information of the specified candidate cell;
a TA reporting period, wherein the TA reporting period is a positive integer multiple of a measurement period of an uplink reference signal;
a TA reporting number threshold, used to indicate that to report a TA value for a last time the DU performs measurement to obtain TA values after a number of times the candidate DU performs measurement to obtain TA values reaches the TA reporting number threshold; or
a TA reporting format, used to indicate a representation way of a TA value for a TA reporting.

52. The apparatus of claim 50, wherein the first request message comprises one or more of the following:
identification information of the target terminal;
identifier information of the specific candidate cell;
frequency information of the specified candidate cell; or
a TA request identifier, used to indicate that a TA value of a candidate cell for the target terminal is obtained in a unit of a single candidate cell.

53. The apparatus of claim 48, wherein the identifier information of the first candidate cell is any one of a customized cell identifier, a new radio cell global identifier, a physical cell identifier, or a cell global identifier.

54. The apparatus of any one of claims 49 to 52, wherein the identifier information of the specified candidate cell is any one of a customized cell identifier, a new radio cell global identifier, a physical cell identifier, or a cell global identifier.

55. The apparatus of claim 48 or 49, wherein the indication information for the uplink signal beam comprises one or more of the following:
a beam index of the uplink signal beam;
a transmission configuration indicator index of the uplink signal beam; or
a spatial relation corresponding to the uplink signal beam.

56. The apparatus of claim 51, wherein the TA reporting format comprises any one of the following:
reporting a TA measurement value;
reporting a change amount in a TA measurement value, wherein the change amount in the TA measurement value is a difference between a TA measurement value at a current moment and a given reference value, or a difference between a TA measurement value at a current moment and a TA measurement value at a previous moment; or
reporting an index corresponding to a TA measurement value in a given TA value list, wherein the given TA value list stores different measurement value intervals of TA value and indexes corresponding to each of the measurement value intervals.

57. The apparatus of any one of claims 47 to 50, wherein the first message is an improved F1 interface message, or a customized F1 interface message, and the improved F1 interface message is obtained by expanding an original F1 interface message.

58. An apparatus for timing advance (TA) transfer, for use in a serving distributed unit (DU), comprising:
a second sending module, used for sending a second request message to a target centralized unit (CU) to obtain a first TA value determined by a candidate DU, wherein the first TA value is a TA value of a specified candidate cell for a target terminal,
wherein the specified candidate cell is one or more of first candidate cells, the first candidate cell is a candidate cell corresponding to the candidate DU, and the target CU stores first TA values determined by all candidate DUs.

59. The apparatus of claim 58, wherein the second request message comprises any one or more of the following:
identification information of the target terminal;
identifier information of the specific candidate cell;
frequency information of the specified candidate cell; or
a TA request identifier, used to indicate that a TA value of a candidate cell for the target terminal is obtained in a unit of a single candidate cell.

60. The apparatus of claim 59, wherein the identifier information of the specified candidate cell is any one of a customized cell identifier, a new radio cell global identifier, a physical cell identifier, or a cell global identifier.

61. The apparatus of any one of claims 58 to 60, wherein the second request message is sent through an improved F1 interface message or a customized F1 interface message, and the improved F1 interface message is obtained by expanding an original F1 interface message.

62. An apparatus for timing advance (TA) transfer, for use in a target centralized unit (CU), comprising:
a third receiving module, used for receiving a first message sent from a candidate distributed unit (DU); and
a third determining module, used for determining, based on the first message, a TA value of a first candidate cell for a target terminal, or a TA value of a specified candidate cell for a target terminal; wherein
the first message contains the TA value of the first candidate cell for the target terminal, or contains the TA value of the specified candidate cell for the target terminal; and
the first candidate cell is a candidate cell corresponding to the candidate DU, and the specified candidate cell is one or more of first candidate cells.

63. The apparatus of claim 62, wherein the apparatus further comprises a third sending module, used for:
sending a reporting configuration message to the candidate DU, wherein the reporting configuration message is used to configure a reporting rule of the candidate DU reporting the TA value of the specified candidate cell for the target terminal; or
sending a first request message to the candidate DU, wherein the first request message is used to obtain a TA value of the specified candidate cell for the target terminal determined by the candidate DU.

64. The apparatus of claim 63, wherein the reporting configuration message comprises one or more of the following:
identification information of the target terminal;
identifier information of the specific candidate cell;
frequency information of the specified candidate cell;
a TA reporting period, wherein the TA reporting period is a positive integer multiple of a measurement period of an uplink reference signal;
a TA reporting number threshold, used to indicate that to report a TA value for a last time the DU performs measurement to obtain TA values after a number of times the candidate DU performs measurement to obtain TA values reaches the TA reporting number threshold; or
a TA reporting format, used to indicate a representation way of a TA value for a TA reporting.

65. The apparatus of claim 63, wherein the first request message comprises any one or more of the following:
identification information of the target terminal;
identifier information of the specific candidate cell;
frequency information of the specified candidate cell; or
a TA request identifier, used to indicate that a TA value of a candidate cell for the target terminal is obtained in a unit of a single candidate cell.

66. The apparatus of any one of claims 62 to 65, wherein the specified candidate cell is determined based on the identifier information of the specified candidate cell, and the identifier information of the specified candidate cell is any one of a customized cell identifier, a new radio cell global identifier, a physical cell identifier, or a cell global identifier.

67. The apparatus of any one of claims 62 to 65, wherein the first candidate cell is determined based on the identifier information of the first candidate cell, and the identifier information of the first candidate cell is any one of a customized cell identifier, a new radio cell global identifier, a physical cell identifier, or a cell global identifier.

68. The apparatus of claim 64, wherein the TA reporting format comprises any one of the following:
reporting a TA measurement value;
reporting a change amount in a TA measurement value, wherein the change amount in the TA measurement value is a difference between a TA measurement value at a current moment and a given reference value, or a difference between a TA measurement value at a current moment and a TA measurement value at a previous moment; or
reporting an index corresponding to a TA measurement value in a given TA value list, wherein the given TA value list stores different measurement value intervals of TA value and indexes corresponding to each of the measurement value intervals.

69. The apparatus of any one of claims 62 to 65, wherein the first message is an improved F1 interface message, or a customized F1 interface message, and the improved F1 interface message is obtained by expanding an original F1 interface message.

70. A computer readable storage medium storing a computer program that causes a computer to perform the method of any one of claims 1 to 11, or perform the method of any one of claims 12 to 15, or perform the method of any one of claims 16 to 23.
